(19) Europäisches Patentamt
European Patent Office
Office européen des brevets

(11) **EP 4 607 967 A1**

(12) **EUROPEAN PATENT APPLICATION**
published in accordance with Art. 153(4) EPC

(43) Date of publication:
**27.08.2025 Bulletin 2025/35**

(21) Application number: **23881620.1**

(22) Date of filing: **08.10.2023**

(51) International Patent Classification (IPC):
***H04W 4/02*** *(2018.01)*

(52) Cooperative Patent Classification (CPC):
**G01S 5/0205; H04W 4/02; H04W 64/00**

(86) International application number:
**PCT/CN2023/123440**

(87) International publication number:
**WO 2024/088041 (02.05.2024 Gazette 2024/18)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **26.10.2022 CN 202211319222**

(71) Applicant: **Huawei Technologies Co., Ltd.
Shenzhen, Guangdong 518129 (CN)**

(72) Inventors:
• **WANG, Han
Shenzhen, Guangdong 518129 (CN)**
• **HUANG, Su
Shenzhen, Guangdong 518129 (CN)**

(74) Representative: **Pfenning, Meinig & Partner mbB
Patent- und Rechtsanwälte
Theresienhöhe 11a
80339 München (DE)**

(54) **METHOD FOR SENDING AND RECEIVING INFORMATION, AND COMMUNICATION APPARATUS**

(57)     According to an information sending method, an information receiving method, and a communication apparatus provided in embodiments of this application, a UE-based carrier phase positioning method can be optimized, so that a terminal device (for example, a positioning terminal device) supports high-precision carrier phase positioning. The method includes: A first device obtains first information, and sends the first information to the positioning terminal device. The first information includes phase information obtained by a reference device by measuring a reference signal, and the first information is used for positioning.

FIG. 13

**Description**

This application claims priority to Chinese Patent Application No. 202211319222.0, filed with the China National Intellectual Property Administration on October 26, 2022 and entitled "INFORMATION SENDING METHOD, INFORMATION RECEIVING METHOD, AND COMMUNICATION APPARATUS", which is incorporated herein by reference in its entirety.

**TECHNICAL FIELD**

This application relates to the positioning field, and in particular, to an information sending method, an information receiving method, and a communication apparatus.

**BACKGROUND**

Carrier phase positioning (carrier phase positioning) is one of main methods for high-precision positioning. In a study item (study item, SI) of reversion 18 (reversion 18, R18) of the 3rd generation partnership project (3rd generation partnership project, 3GPP), it is discussed that carrier phase positioning may include terminal device-based (user equipment-based, UE-based) carrier phase positioning and terminal device-assisted (UE-assisted) carrier phase positioning.

Currently, a procedure of a UE-based carrier phase positioning method includes: A terminal device measures a carrier phase change when a reference signal sent by a network device arrives at the terminal device, to obtain a distance value between the terminal device and the network device, and estimate a location of the terminal device with reference to location information that is of the network device and that is in assistance data (assistance data) sent by a location management function (location management function, LMF) network element. However, in a phase measurement process of a UE-based carrier phase positioning solution, there are non-ideal factors such as a synchronization error, a random initial phase error, a clock shift frequency offset, and an engineering parameter error of the network device. These non-ideal factors cause an error in carrier phase measurement, thereby affecting positioning accuracy. Therefore, how to optimize the UE-based carrier phase positioning method to make the terminal device support high-precision carrier phase positioning is an urgent problem to be resolved currently.

**SUMMARY**

According to an information sending method, an information receiving method, and a communication apparatus provided in embodiments of this application, a UE-based carrier phase positioning method can be optimized, so that a terminal device supports high-precision carrier phase positioning.

To achieve the foregoing objectives, the following technical solutions are used in embodiments of this application.

According to a first aspect, an information sending method is provided. The method may be performed by a first device, or may be performed by a component of the first device, for example, a processor, a chip, or a chip system of the first device, or may be implemented by a logical module or software that can implement all or some functions of the first device. An example in which the method is performed by the first device is used for description below. The method includes: A first device obtains first information, and sends the first information to a positioning terminal device. The first information includes phase information obtained by a reference device by measuring a reference signal. The first information is used for positioning. In this embodiment of this application, the first information may include the phase information obtained by the reference device by measuring the reference signal. Therefore, after receiving the first information, the positioning terminal device may support, in a UE-based positioning mode, the positioning terminal device in performing double-difference carrier phase positioning by using the phase information in the first information, so that a carrier phase measurement error caused by non-ideal factors such as a synchronization error, a random initial phase error, a clock shift frequency offset, and an engineering parameter error of a positioning assisting node (for example, a network device or an assisting terminal device) is eliminated through double-difference carrier phase positioning. In this way, positioning accuracy is improved. Therefore, based on the information sending and receiving method provided in embodiments of this application, a UE-based carrier phase positioning method can be optimized, so that the positioning terminal device supports high-precision carrier phase positioning.

According to a second aspect, an information receiving method is provided. The method may be performed by a positioning terminal device, or may be performed by a component of the positioning terminal device, for example, a processor, a chip, or a chip system of the positioning terminal device, or may be implemented by a logical module or software that can implement all or some functions of the positioning terminal device. An example in which the method is performed by the positioning terminal device is used for description below. The method includes: The positioning terminal device receives first information from a first device. The first information includes phase information obtained by a reference device by measuring a reference signal. The first information is used for positioning. In this embodiment of this application, the first information may include the phase information obtained by the reference device by measuring the reference signal. Therefore, after receiving the first information, the positioning terminal device may support, in a UE-based positioning mode, the positioning terminal device in performing double-difference carrier phase positioning by using the phase information in the first information, so that a carrier phase measurement error caused by non-ideal factors such as a synchronization error, a random initial phase error, a clock shift frequency offset, and an engineering parameter error of a positioning assisting node is eliminated through double-difference carrier phase positioning. In this way, positioning accuracy is improved. Therefore, based on the information sending and receiving method provided in this embodiment of this application, a UE-based carrier phase positioning method can be optimized, so that the positioning terminal device supports high-precision carrier phase positioning.

With reference to the first aspect or the second aspect, in a possible implementation, the phase information includes one or more of the following:

a first phase measurement value, where the first phase measurement value is a phase measurement value obtained by the reference device by measuring a reference signal of a first positioning assisting node based on a first reference signal resource;
a second phase measurement value, where the second phase measurement value is a phase measurement value obtained by the reference device by measuring the reference signal of the first positioning assisting node based on a second reference signal resource;
a third phase measurement value, where the third phase measurement value is a phase measurement value obtained by the reference device by measuring a reference signal of a second positioning assisting node based on a third reference signal resource;
a fourth phase measurement value, where the fourth phase measurement value is a phase measurement value obtained by the reference device by measuring the reference signal of the second positioning assisting node based on a fourth reference signal resource;
a difference between the first phase measurement value and the second phase measurement value;
a difference between the first phase measurement value and the third phase measurement value;
a difference between the first phase measurement value and the fourth phase measurement value;
a difference between the second phase measurement value and the third phase measurement value;
a difference between the second phase measurement value and the fourth phase measurement value; or
a difference between the third phase measurement value and the fourth phase measurement value. In other words, the positioning terminal device may obtain a PDOA of the reference device by using the phase information of the reference device in the first information, so that the positioning terminal device can obtain a double-difference PDOA, to support the positioning terminal device in performing double-difference carrier phase positioning.

With reference to the first aspect or the second aspect, in a possible implementation, the first information further includes one or more of the following:
identification information of a positioning assisting node for sending the reference signal, identification information of the reference signal, configuration information of the reference signal, measurement time information for measuring the reference signal by the reference device, an RSTD obtained by the reference device by measuring the reference signal, AOD information between the reference device and the positioning assisting node for sending the reference signal, or location information of the reference device.

Optionally, the RSTD obtained by the reference device by measuring the reference signal may be used to determine a search range for double-difference carrier phase positioning. The positioning terminal device may perform location resolving of double-difference carrier phase positioning in a search range corresponding to the RSTD of the reference device, so that efficiency of location resolving and positioning precision of the positioning terminal device are improved.

Optionally, the AOD information between the reference device and the positioning assisting node for sending the reference signal may be used to implement carrier phase positioning when the positioning terminal device does not obtain location information of the positioning assisting node.

With reference to the first aspect or the second aspect, in a possible implementation, the measurement time information for measuring the reference signal by the reference device includes a moment and/or a time period for receiving the reference signal by the reference device.

Optionally, the time period in which the reference device receives the reference signal may indicate validity time (or use time) of the phase information. In other words, when performing double-difference carrier phase positioning, the positioning terminal device may determine, based on the time period in which the reference device receives the reference signal, whether the phase information is invalid.

With reference to the first aspect or the second aspect, in a possible implementation, there are a plurality of reference devices, and the first information includes phase information obtained by each of the plurality of reference devices by measuring the reference signal.

With reference to the first aspect or the second aspect, in a possible implementation, the first information further includes an RSTD obtained by each of the plurality of the reference devices by measuring the reference signal, and/or AOD information between each of the plurality of reference devices and the positioning assisting node for sending the reference signal.

With reference to the first aspect or the second aspect, in a possible implementation, the first information further includes measurement time information for measuring the reference signal by each of the plurality of reference devices.

With reference to the first aspect or the second aspect, in a possible implementation, the first information further includes location information of the plurality of reference devices and/or first indication information. The first indication information indicates a priority of each of the plurality of reference devices.

Optionally, the priority may indicate a sequence in which the positioning terminal device selects the phase information corresponding to the reference device to perform double-difference carrier phase positioning.

Optionally, the first device may determine the priority of each reference device based on a neighboring degree between a cell in which the positioning terminal device is located and a cell in which each reference device is located. A priority of a reference device located in a same cell as the positioning terminal device is higher than a priority of a reference device located in a neighboring cell of the positioning terminal device. A shorter distance between the reference device and the positioning terminal device indicates that an error (for example, a synchronization error and a random initial phase error) corresponding to the positioning terminal device in carrier phase positioning measurement is closer to an error corresponding to the reference device. Therefore, effect of eliminating an error by using a double-difference PDOA in double-difference carrier phase positioning is better, and positioning precision is higher. In other words, the first device may enable, based on the priority in the first indication information, the positioning terminal device to preferably select phase information corresponding to a reference device that is close to the positioning terminal device, to perform double-difference carrier phase positioning, so that positioning precision is improved.

With reference to the first aspect, in a possible implementation, the first device is a location management network element, and the first information further includes the RSTD obtained by the reference device by measuring the reference signal. That a first device obtains first information may include:

The first device sends a first measurement request to the reference device, where the first measurement request is used to request the reference device to send, to the first device, the phase information and the RSTD that are obtained by the reference device by measuring the reference signal; and
the first device receives the phase information and the RSTD that are from the reference device.

With reference to the first aspect, in a possible implementation, the first device is a location management network element, and the first information further includes the AOD information between the reference device and the positioning assisting node for sending the reference signal, and that a first device obtains first information may include:

The first device sends a second measurement request to the reference device, where the second measurement request is used to request the reference device to send, to the first device, the phase information obtained by the reference device by measuring the reference signal, an RSRP, and/or an RSRPP of at least one path; and
the first device receives the phase information and the RSRP and/or the RSRPP of the at least one path that are from the reference device, and determines, based on the RSRP and/or the RSRPP of the at least one path, an AOD between the reference device and the positioning assisting node for sending the reference signal.

With reference to the first aspect, in a possible implementation, the first device is the reference device, and before the first device sends the first information to the positioning terminal device, the method provided in the first aspect further includes:
The first device obtains second indication information, where the second indication information indicates the first device to send the first information to the positioning terminal device.

With reference to the second aspect, in a possible implementation, the first information further includes location information of the reference device and the AOD information between the reference device and the positioning assisting node for sending the reference signal, and the method provided in the second aspect further includes:

The positioning terminal device obtains a measurement result of a target terminal device, where measurement result information includes phase information obtained by the target terminal device by measuring the reference signal; and
the positioning terminal device determines location information of the target terminal device based on the first information and the measurement result information of the target terminal device. In other words, by using the AOD of the reference device, the PDOA of the reference device, and the location information of the reference device that are carried in the first information, the positioning terminal device can also implement high-precision carrier phase positioning without using the location information of the positioning assisting node.

According to a third aspect, a communication apparatus is provided, to implement the foregoing method. The communication apparatus may be the first device in the first aspect or the second aspect, or an apparatus including the first device, or an apparatus included in the first device, for example, a chip. Alternatively, the communication apparatus may be the positioning terminal device in the first aspect or the second aspect, or an apparatus including the positioning terminal device, or an apparatus included in the positioning terminal device. The communication apparatus includes a corresponding module, unit, or means (means) for implementing the foregoing method. The module, unit, or means may be implemented by hardware, software, or hardware executing corresponding software. The hardware or the software includes one or more modules or units corresponding to the foregoing functions.

In some possible designs, the communication apparatus may include a processing module and a transceiver module. The transceiver module may also be referred to as a transceiver unit, and is configured to implement a sending function and/or a receiving function in any one of the foregoing aspects and any one of the possible implementations of the foregoing aspects. The transceiver module may include a transceiver circuit, a transceiver machine, a transceiver, or a communication interface. The processing module may be configured to implement a processing function in any one of the foregoing aspects and any one of the possible implementations of the foregoing aspects.

In some possible designs, the transceiver module includes a sending module and a receiving module, respectively configured to implement the sending function and the receiving function in any one of the foregoing aspects and any one of the possible implementations of the foregoing aspects.

According to a fourth aspect, a communication apparatus is provided. The apparatus includes a processor and a memory. The memory is configured to store computer instructions. When the processor executes the instructions, the communication apparatus is enabled to perform the method in any one of the foregoing aspects. The communication apparatus may be the first device in the first aspect or the second aspect, or an apparatus including the first device, or an apparatus included in the first device, for example, a chip. Alternatively, the communication apparatus may be the positioning terminal device in the first aspect or the second aspect, or an apparatus including the positioning terminal device, or an apparatus included in the positioning terminal device.

According to a fifth aspect, a communication apparatus is provided, including a processor and a communication interface. The communication interface is configured to communicate with a module outside the communication apparatus. The processor is configured to execute a computer program or instructions, to enable the communication apparatus to perform the method according to any one of the foregoing aspects. The communication apparatus may be the first device in the first aspect or the second aspect, or an apparatus including the first device, or an apparatus included in the first device, for example, a chip. Alternatively, the communication apparatus may be the positioning terminal device in the first aspect or the second aspect, or an apparatus including the positioning terminal device, or an apparatus included in the positioning terminal device.

According to a sixth aspect, a communication apparatus is provided, including at least one processor. The processor is configured to execute a computer program or instructions stored in a memory, to enable the communication apparatus to perform the method in any one of the foregoing aspects. The memory may be coupled to the processor, or may be independent of the processor. The communication apparatus may be the first device in the first aspect or the second aspect, or an apparatus including the first device, or an apparatus included in the first device, for example, a chip. Alternatively, the communication apparatus may be the positioning terminal device in the first aspect or the second aspect, or an apparatus including the positioning terminal device, or an apparatus included in the positioning terminal device.

According to a seventh aspect, a computer-readable storage medium is provided. The computer-readable storage medium stores a computer program or instructions. When the computer program or the instructions are executed on a communication apparatus, the communication apparatus is enabled to perform the method in any one of the foregoing aspects.

According to an eighth aspect, a computer program product including instructions is provided. When the computer program product is run on a communication apparatus, the communication apparatus is enabled to perform the method in any one of the foregoing aspects.

According to a ninth aspect, a communication apparatus is provided (for example, the communication apparatus may be a chip or a chip system). The communication apparatus includes a processor, configured to implement the function in any one of the foregoing aspects.

In some possible designs, the communication apparatus includes a memory, and the memory is configured to store necessary program instructions and data.

In some possible designs, when the apparatus is a chip system, the apparatus may include a chip, or may include a chip and another discrete component.

It may be understood that, when the communication apparatus provided in any one of the third aspect to the ninth aspect is a chip, the foregoing sending action/function may be understood as an output, and the receiving action/function may be understood as an input.

For technical effects brought by any design manner of the third aspect to the ninth aspect, refer to the technical effects brought by different design manners of the first aspect and the second aspect. Details are not described herein again.

According to a tenth aspect, a communication system is provided. The communication system includes the first device in the foregoing aspects and the positioning terminal device in the foregoing aspects.

## BRIEF DESCRIPTION OF DRAWINGS

FIG. 1 is a diagram of DL-AOD between a network device and a terminal device according to an embodiment of this application;

FIG. 2 is a diagram of ranging in a carrier phase positioning method according to an embodiment of this application;

FIG. 3 is a diagram of an assistance data transmission procedure initiated by an LMF network element according to an embodiment of this application;

FIG. 4 is a diagram of an assistance data transmission procedure initiated by a terminal device according to an embodiment of this application;

FIG. 5 is a diagram of a location information transmission procedure initiated by an LMF network element according to an embodiment of this application;

FIG. 6 is a diagram of a location information transmission procedure initiated by a terminal device according to an embodiment of this application;

FIG. 7 is a diagram of double-difference carrier phase positioning according to an embodiment of this application;

FIG. 8 is a diagram of an architecture of a communication system corresponding to an information sending and receiving method according to an embodiment of this application;

FIG. 9 is a diagram 1 of a relationship between a positioning terminal device, an NG-RAN device, an LMF network element, and an AMF network element according to an embodiment of this application;

FIG. 10 is a diagram 2 of a relationship between a positioning terminal device, an NG-RAN device, an LMF network element, and an AMF network element according to an embodiment of this application;

FIG. 11 is a diagram 3 of a relationship between a positioning terminal device, an NG-RAN device, an LMF network element, and an AMF network element according to an embodiment of this application;

FIG. 12 is a diagram of a structure of a communication apparatus according to an embodiment of this application;

FIG. 13 is a schematic flowchart of an information sending and receiving method according to an embodiment of this application;

FIG. 14 is a diagram of an application scenario of a double-difference carrier phase positioning algorithm 2 according to an embodiment of this application;

FIG. 15 is a diagram of positioning of a double-difference carrier phase positioning algorithm 2 according to an embodiment of this application;

FIG. 16 is an example diagram of an information sending and receiving method according to an embodiment of this application;

FIG. 17 is another example diagram of an information sending and receiving method according to an embodiment of this application;

FIG. 18 is still another example diagram of an information sending and receiving method according to an embodiment of this application;

FIG. 19 is a diagram of a structure of a first device according to an embodiment of this application; and

FIG. 20 is a diagram of a structure of a positioning terminal device according to an embodiment of this application.

## DESCRIPTION OF EMBODIMENTS

For ease of understanding of technical solutions provided in embodiments of this application, technologies related to this application are first described briefly. The brief descriptions are as follows.

1. Reference signal

The reference signal in embodiments of this application may include a downlink reference signal (downlink reference signal, DL-RS) and/or a sidelink reference signal (sidelink reference signal, SL-RS).

The downlink reference signal may be a reference signal sent by a network device to a terminal device. The downlink reference signal may include one or more of the following: a positioning reference signal (positioning reference signal, PRS) dedicated to positioning proposed in R16, a downlink reference signal (for example, a synchronization signal/physical broadcast channel block (synchronization signal/physical broadcast channel block, SSB), a channel state information reference signal (channel state information reference signal, CSI-RS), a tracking reference signal (tracking reference signal, TRS), or a downlink demodulation reference signal (downlink demodulation reference signal, DL-DMRS)), another future downlink reference signal, or the like proposed in another version. This is not specifically limited in embodiments of this application.

It may be understood that, in a new radio (new radio, NR) system, because the terminal device is connected to the network device through a Uu interface, the downlink reference signal is transmitted through the Uu interface.

It should be understood that meanings of a "PRS" and a "downlink PRS (downlink-PRS, DL-PRS)" are the same. In other words, the "PRS" and the "DL-PRS" may be interchangeably described. This is uniformly described herein, and details are not described below again.

The sidelink reference signal may be a reference signal transmitted between two terminal devices through a sidelink (sidelink, SL). The SL may also be referred to as a direct link, a secondary link, a sidelink, or the like. The SL is a link introduced to support direct communication between devices. The SL may be used in a device-to-device (device-to-device, D2D) communication scenario, and may also be used in a vehicle-to-everything (vehicle-to-everything, V2X) scenario. The sidelink reference signal may include a sidelink positioning reference signal (SL-positioning reference signal, SL-PRS).

For example, the terminal device may send the SL-PRS to an assisting terminal device. Correspondingly, the assisting terminal device receives the SL-PRS from the terminal device. Alternatively, an assisting terminal device may send the SL-PRS to a terminal device. Correspondingly, the terminal device receives the SL-PRS from the assisting terminal device. The assisting terminal device may be a terminal device whose location is known and that can be connected to the terminal device through an SL. For example, the assisting terminal device may be an anchor terminal device (anchor user equipment), a road side unit (road side unit, RSU), or a positioning reference unit (positioning reference unit, PRU). The anchor terminal device is a terminal device configured to support positioning of a target terminal device. For example, the anchor terminal device may send and/or receive a sidelink reference signal through an SL interface (for example, a PC5 interface), and provide positioning-related information, and the like.

It should be understood that, because two terminal devices are connected through the PC5 interface, the sidelink reference signal is transmitted through the PC5 interface.

2. Configuration information of a reference signal

In embodiments of this application, a terminal device may measure a reference signal based on configuration information of the reference signal delivered by a network device. The configuration information of the reference signal may include a related parameter for receiving the reference signal by the terminal device, for example, a time domain resource and/or a frequency domain resource for receiving the reference signal by the terminal device.

It should be understood that a concept of a beam is introduced in a new radio (new radio, NR) system. The beam is a communication resource. The beam may be a wide beam, a narrow beam, or another type of beam. A technology for forming the beam may be a beamforming technology or another technical means. The beamforming technology may be specifically a digital beamforming technology, an analog beamforming technology, or a hybrid digital/analog beamforming technology. Different beams may be considered as different resources. Same information or different information may be sent by using different beams. Optionally, a plurality of beams having same or similar communication features may be considered as one beam. One beam may be formed through one or more antenna ports configured to transmit a data channel, a control channel, a reference signal, and the like. For example, a transmit beam may indicate distribution of signal strength formed in different directions in space after a signal is transmitted through an antenna, and a receive beam may indicate distribution that an antenna array enhances or weakens reception of a radio signal in different directions in space. It may be understood that one or more antenna ports forming one beam may also be considered as one antenna port set. In a current NR protocol, a beam may be represented by an antenna port (antenna port) quasi colocation (quasi colocation, QCL) relationship. Specifically, two signals of a same beam have a QCL relationship with respect to a spatial receiving parameter (spatial Rx parameter), namely, QCL-Type D: {Spatial Rx parameter} in the protocol. In the protocol, the beam may be specifically represented by using identifiers of various signals, for example, a resource identifier (identifier, ID) of a CSI-RS, an ID of an SSB, a resource ID of a TRS, or a resource ID of a DL-PRS. The antenna port is a logical concept, and is not in a one-to-one correspondence to a physical antenna. The antenna port is a logical unit formed by one or more physical antennas for transmitting a signal or a signal stream.

It may be understood that, because a concept of a beam is introduced into the NR system, a concept of a reference signal resource is introduced into a reference signal configuration in NR positioning, to represent the beam. The following describes the configuration information of the reference signal by using a DL-PRS configuration and an SL-PRS configuration as an example.

The DL-PRS configuration may include a related parameter for receiving a DL-PRS by the terminal device. For example, the DL-PRS configuration may include one or more DL-PRS resource sets (DL-PRS resource sets) or one or more DL-PRS resources (DL-PRS resources). The DL-PRS resource set may include one or more DL-PRS resources. The DL-PRS resource may include a time domain and/or frequency domain resource, an antenna port, a DL-PRS resource ID (DL-PRS resource ID), or the like for receiving the DL-PRS by the terminal device. It may be understood that the DL-PRS resource set may further include a DL-PRS resource set identifier (for example, an SL-PRS resource set ID). For specific descriptions of the DL-PRS configuration, refer to the technical standard (technical standard, TS) 38.214. Details are not described herein again.

Optionally, in embodiments of this application, the network device may send the DL-PRS configuration to the terminal device by using higher layer signaling. The higher layer signaling may be, for example, radio resource control (radio resource control, RRC) signaling or medium access control (media access control, MAC) layer signaling. This is not specifically limited in embodiments of this application.

Optionally, in embodiments of this application, the network device may be an access network (radio access network, RAN) device, for example, a next generation NodeB (gNodeB, gNB), a transmission and reception point (transmission and reception point, TRP), or a transmission point (transmission point, TP) in the NR system. This is not specifically limited in embodiments of this application.

It should be understood that, in the NR system, one gNB may support one or more cells. One or more TRPs may be deployed in one cell. A plurality of reference signal resources (for example, DL-PRS resources) may be configured for one TRP. In other words, the TRP may be associated with a cell and/or a reference signal. Therefore, the TRP may be distinguished by using an identifier of the cell, a reference signal resource ID, and the like.

Optionally, in this embodiment of this application, identification information of the TRP may include one or more of the following:

a physical cell identifier (physical cell ID, PCI), a global cell identifier (global cell ID, GCI), a TRP ID, a reference signal resource ID, or the like. The TRP ID may be determined by using reference signal identification information (for example, a DL-PRS ID). It should be understood that, in the NR system, the identification information of the TRP may include a TRP ID. The TRP ID is used to uniquely identify a TRP in the gNB. An information element type (information element type) of the TRP ID is an integer. For example, a value range of the TRP ID may be (1 to 65535, ...). Each TRP may be associated with only one DL-PRS ID. The DL-PRS ID may be represented by a field dl-PRS-ID, and the field dl-PRS-ID may be associated with a plurality of DL-PRS resource set IDs corresponding to one TRP. In addition, a DL-PRS resource may be uniquely identified by using the dl-PRS-ID, the DL-PRS resource set ID, and the DL-PRS resource ID.

For example, if only one TRP is deployed in one cell, the TRP may be distinguished by using a PCI corresponding to a cell in which the TRP is located. If a plurality of TRPs are deployed in one cell, the TRPs may be distinguished by using a PCI and a DL-PRS resource ID that correspond to the cell in which the TRPs are located, or the TRPs may be distinguished by using dl-PRS-ID-r16.

The SL-PRS configuration may include one or more SL-PRS resource sets or one or more SL-PRS resources. The SL-PRS resource is similar to the DL-PRS resource. The SL-PRS resource may include one or more of the following: a time domain resource and/or a frequency domain resource, an antenna port, an SL-PRS resource identifier (for example, an SL-PRS resource ID), and the like for receiving a DL-PRS. It may be understood that the SL-PRS resource set may further include an SL-PRS resource set identifier (for example, an SL-PRS resource set ID).

Optionally, in the SL, the SL-PRS configuration may be agreed on in a protocol. Alternatively, the SL-PRS configuration may be configured by the network device or an LMF network element. This is not specifically limited in embodiments of this application.

Optionally, in embodiments of this application, the SL-PRS configuration may be received by the terminal device. Alternatively, the SL-PRS configuration may be selected by the terminal device from a resource pool. This is not specifically limited in embodiments of this application.

3. Positioning assisting node

In embodiments of this application, the positioning assisting node may also be referred to as an anchor node (anchor node). The positioning assisting node may send and/or measure a reference signal for positioning. The positioning assisting node may include a network device and/or an assisting terminal device. As described in the preamble "reference signal" of the specific implementation, the assisting terminal device may be an anchor terminal device, an RSU, or a PRU.

4. Positioning method

In embodiments of this application, a positioning method that may be used by a terminal device includes but is not limited to: downlink time difference of arrival (downlink time difference of arrival, DL-TDOA) positioning, downlink angle of departure (downlink angle of departure, DL-AOD) positioning, sidelink time difference of arrival (sidelink time difference of arrival, SL-TDOA) positioning, sidelink angle of departure (sidelink angle of departure, SL-AOD) positioning, carrier phase positioning, or the like. This is not specifically limited in embodiments of this application.

Optionally, in embodiments of this application, that a terminal device performs positioning by using a positioning method like DL-TDOA positioning, DL-AOD positioning, or carrier phase positioning may mean: The terminal device measures a DL-PRS sent by a network device, obtains a measurement result of the DL-PRS, and performs location estimation based on the measurement result and assistance data.

Optionally, in embodiments of this application, that a terminal device performs positioning by using a positioning method like SL-TDOA positioning or SL-AOD positioning may mean: The terminal device measures an SL-PRS sent by an assisting terminal device, obtains a measurement result of the SL-PRS, and performs location estimation based on the measurement result and assistance data.

The following separately describes DL-TDOA positioning, SL-TDOA positioning, DL-AOD positioning, SL-AOD positioning, and carrier phase positioning.

DL-TDOA: A measurement result corresponding to the DL-TDOA positioning method may be a downlink reference signal time difference (downlink reference signal time difference, DL-RSTD) of arrival. When measuring a DL-PRS, the terminal device may select a network device as a reference network device, and a DL-PRS resource configured by the reference network device is used as a reference resource. In this case, the DL-RSTD is a difference between a measurement value obtained by the terminal device by measuring time at which a DL-PRS of a non-reference network device arrives at the terminal device and a measurement value obtained by the terminal device by measuring time at which the DL-PRS corresponding to the reference resource of the reference network device arrives at the terminal device.

SL-TDOA: In embodiments of this application, a measurement result corresponding to the SL-TDOA positioning method may be a sidelink reference signal time difference (sidelink reference signal time difference, SL-RSTD) of arrival. When measuring an SL-PRS, the terminal device may select an assisting terminal device as a reference assisting terminal device, and an SL-PRS resource configured by the reference assisting terminal device is used as a reference resource. In this case, the SL-RSTD is a difference between a measurement value obtained by the terminal device by measuring time at which an SL-PRS of a non-reference assistance terminal arrives at the terminal device and a measurement value obtained by the terminal device by measuring time at which the SL-PRS corresponding to the reference resource of the reference assisting terminal device arrives at the terminal device.

Optionally, in embodiments of this application, a measurement value obtained by the terminal device by measuring time at which a reference signal (for example, the DL-PRS or the SL-PRS) arrive at the terminal device may be time of arrival (time of arrival, TOA) of a symbol in which the reference signal is located, or TOA of a subframe (subframe) in which the reference signal is located. This is not specifically limited in embodiments of this application.

Optionally, in embodiments of this application, the TOA of the subframe in which the reference signal is located may be a subframe boundary at which the terminal device receives the reference signal. The subframe boundary may be a time domain start moment or a time domain end moment of the subframe; or the subframe boundary may be the first slot or the last slot of the subframe; or the subframe boundary may be a start symbol in the first slot of the subframe or an end symbol in the last slot of the subframe. This is not specifically limited in embodiments of this application.

For example, a network device $i$ is the reference network device, and a network device $j$ is the non-reference network device. The DL-RSTD is $T_{SubframeRxj}-T_{SubframeRxi}$. $T_{SubframeRxj}$ is a time domain start moment of a subframe in which the terminal device receives a reference signal from the network device $j$. $T_{SubframeRxi}$ is a time domain start moment of a subframe in which the terminal device receives a reference signal from the network device $i$, and the subframe is closest to the subframe in time in which the terminal device receives the reference signal from the network device $j$.

DL-AOD: The DL-AOD may be an included angle, observed from the network device, between a departure direction of a reference signal and a reference direction (for example, a horizontal plane or a normal line of the horizontal plane) when the network device sends the reference signal (for example, the DL-PRS) to the terminal device.

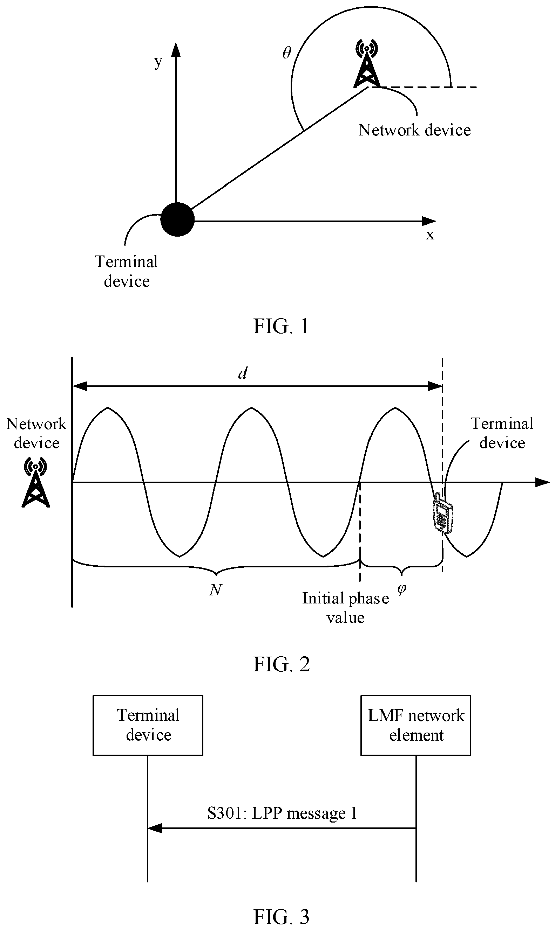

For example, a location of the terminal device is an origin in an x-y coordinate system, the reference direction is an x-axis, and counterclockwise rotation is a positive direction. As shown in FIG. 1, the DL-AOD between the network device and the terminal device is $\theta$. The DL-AOD may be determined by measuring received powers of reference signals in a plurality of different beam directions. Specifically, the network device sends a plurality of reference signals in different beam directions to the terminal device, and the terminal device measures received powers of the plurality of reference signals in the different beam directions, and sends received powers of a plurality of reference signals in a same beam direction to the network device. Correspondingly, the network device receives the received powers of the plurality of reference signals in the different beam directions from the terminal device, and determines the DL-AOD between the network device and the terminal device based on a proportional relationship between the received powers of the reference signals in the different beam directions, and a beam direction corresponding to each reference signal.

For example, the foregoing method for determining the DL-AOD is described by using an example in which the network device sends three reference signals. Transmit beams corresponding to the three reference signals sent by the network device are respectively a beam #1, a beam #2, and a beam #3, the beam #1 is not aligned with the terminal device, the beam #2 is partially aligned with the terminal device, and the beam #3 is completely aligned with the terminal device.

The terminal device measures received powers of reference signals of the three beams, and feeds back measurement results to the network device. It may be understood that, because the beam #1 is not aligned with the terminal device, a received power measured by using the beam #1 is the lowest. Because the beam #2 is partially aligned with the terminal device, a received power measured by using the beam #2 is greater than that measured by using the beam #1. Because the beam #3 is completely aligned with the terminal device, a measured received power is the highest. After an LMF network element obtains the measurement results, the measurement results are matched with received powers that are measured in advance in an ideal condition and that correspond to a plurality of beams at different emergent angles, to find that a proportional relationship between the received powers corresponding to the beam #1, the beam #2, and the beam #3 better matches a pre-measured proportional relationship between the three beams in a 30-degree direction, so as to determine that the terminal device is in the 30-degree direction.

It should be understood that, in this embodiment of this application, the network device may provide, for the LMF network element, reference signal received power information (for example, a pre-measured received power proportion relationship corresponding to the plurality of beams at different emergent angles) corresponding to the plurality of beams at different emergent angles, so that the LMF network element determines the DL-AOD between the network device and the terminal device. The LMF network element may further share, with the terminal device, the reference signal received power information corresponding to the plurality of beams at different emergent angles, so that the terminal device performs location estimation and/or determines the DL-AOD between the network device and the terminal device.

Optionally, in this embodiment of this application, the measurement result corresponding to the DL-AOD positioning method may be a reference signal received power (reference signal received power, RSRP) of the DL-PRS and/or a reference signal received path power (reference signal received path power, RSRPP) of the DL-PRS on at least one path. The measurement result may be reported in a reporting periodicity corresponding to the DL-AOD positioning method. It may be understood that, because the reference signal may be periodically sent, when a periodicity of the reference signal is less than the reporting periodicity, the terminal device may measure the reference signal a plurality of times in one reporting periodicity, and the terminal device reports only one RSRP in one reporting periodicity. Therefore, the RSRP reported by the terminal device may be an average value obtained after a plurality of times of measurement.

It should be understood that an "RSRP of the DL-PRS" and a "DL-PRS-RSRP" may be interchangeably expressed, and an "RSRPP of the DL-PRS" and a "DL-PRS-RSRPP" may be interchangeably expressed. This is uniformly described herein, and details are not described below again.

RSRPP: The RSRPP may be a power of a linear average value of channel responses of a frequency domain unit carrying a reference signal at an $i^{th}$ path delay. Herein, i is an integer greater than or equal to 1, and a path delay of a first path corresponds to a first path delay. The frequency domain unit may be a resource element (resource element, RE). In an NR system, one subcarrier in frequency domain or one symbol in time domain may be defined as an RE. The RE is a resource with a minimum granularity at a physical layer. The symbol in time domain may be an orthogonal frequency division multiplexing (orthogonal frequency division multiplexing, OFDM) symbol.

Path (path): In embodiments of this application, the path may indicate a path for transmitting a reference signal in a wireless environment. Because there may be an obstacle in a wireless transmission environment, the reference signal may arrive at the terminal device from the network device through different paths. Therefore, the paths may be classified into a line of sight (line of sight, LOS) path and a non-line of sight (non-line of sight, NLOS) path. The LOS path may be a corresponding transmission path on which the reference signal directly arrives at the terminal device from the network device. The NLOS path may be a corresponding transmission path on which the reference signal arrives at the terminal device from the network device through reflection, refraction, scattering, diffraction, or the like. It may be understood that, because different paths correspond to different transmission distances, and the reference signal arrives at the terminal device in different sequences on different paths, different paths correspond to different delays. In other words, the terminal device may distinguish between different paths by using different delays.

It should be understood that the first path may be a corresponding path on which the reference signal is first received by the terminal device when the reference signal is received. In an ideal wireless environment in which there is no obstacle between the network device and the terminal device, the first path is usually an LOS path. In a non-ideal radio environment, the first path may be an NLOS path.

It should be understood that, in embodiments of this application, the "first path" and a "first-arrival path" may be interchangeably expressed, and the "LOS path" and a "direct path" may be interchangeably expressed. This is uniformly described herein, and details are not described below again.

SL-AOD: Similar to the DL-AOD, the SL-AOD may be an included angle, observed from the assisting terminal device, between a departure direction of a reference signal and a reference direction (for example, a horizontal plane or a normal line of the horizontal plane) when the assisting terminal device sends the reference signal (for example, the SL-PRS) to the terminal device.

Optionally, in embodiments of this application, the measurement result corresponding to the SL-AOD positioning method may be one or more of the following: an SL-AOD, an RSRP of the SL-PRS, and an RSRPP of the SL-PRS on at least one path. The RSRP of the SL-PRS and/or the RSRPP of the SL-PRS on the at least one path are/is obtained by a terminal by measuring the SL-PRS sent by the assisting terminal device. The terminal device may send the RSRP of the SL-PRS and/or the RSRPP of the SL-PRS on the at least one path to the LMF network element. Correspondingly, the LMF network element receives the RSRP of the SL-PRS and/or the RSRPP of the SL-PRS on the at least one path from the terminal device, and determines the SL-AOD based on the RSRP of the SL-PRS and/or the RSRPP of the SL-PRS on the at least one path.

Alternatively, optionally, the SL-AOD is determined by the terminal device. The terminal device may receive the SL-PRS through a plurality of antennas, and determine the SL-AOD based on a phase difference when the SL-PRS arrives at different antennas.

It may be understood that an "RSRP of the SL-PRS" and an "SL-PRS-RSRP" may be interchangeably expressed, and an "RSRPP of the SL-PRS" and an "SL-PRS-RSRPP" may be interchangeably expressed. This is uniformly described herein, and details are not described below again.

Carrier phase positioning: The carrier phase positioning may mean that a receive end measures a carrier phase value of a carrier signal (namely, a reference signal) transmitted by a transmit end to obtain a distance value with an ambiguity of whole cycles (ambiguity of whole cycles), and then the ambiguity of whole cycles is solved to determine a distance between the receive end and the transmit end. The ambiguity of whole cycles is a quantity of whole cycles in which the reference signal is transmitted in space. Specifically, the ambiguity of whole cycles is an unknown integer number of cycles that corresponds to a first observed value of a phase difference between the carrier phase value and an initial phase value. It may be understood that the ambiguity of whole cycles may be solved by using a plurality of mathematical methods, for example, least square ambiguity decorrelation adjustment (least square ambiguity decorrelation adjustment, LAMBDA), a fast ambiguity algorithm, an ambiguity of whole cycles function method, a classical method of undetermined coefficients, or a Doppler method (which may also be referred to as a triple-difference method). This is not specifically limited in embodiments of this application.

For example, FIG. 2 is a diagram of ranging in a carrier phase positioning method. The transmit end may be a network device, and the receive end may be a terminal device. A distance d between the receive end and the transmit end may be determined by using formula (1).

$$d = \lambda \left( N + \frac{\varphi}{2\pi} \right) \qquad\qquad \text{formula (1)}$$

In formula (1), $\lambda$ represents a wavelength of the carrier signal, $\varphi$ is a phase measurement value obtained by the receive end by measuring the carrier signal, and $N$ is an ambiguity of whole cycles. As shown in FIG. 2, $N$ represents a quantity of whole carrier cycles through which the reference signal of the network device passes during spatial transmission, and $\varphi$ represents a phase value measured by the terminal device when the reference signal from the network device arrives at the terminal device.

5. Positioning mode

In an NR system, a UE-based positioning mode and a UE-assisted positioning mode may be obtained through classification based on different devices responsible for location estimation.

5.1. UE-based positioning mode

The UE-based positioning mode may mean that a terminal device performs location estimation on the terminal device based on assistance data, and may report a measurement result of a positioning measurement request. The terminal device in the UE-based positioning mode may be referred to as a positioning terminal device.

Optionally, in this embodiment of this application, the positioning terminal device may perform location estimation on a target terminal device based on the assistance data, and may report a measurement result of the positioning measurement request. In the UE-based positioning mode, the positioning terminal device may estimate a location of the positioning terminal device based on the assistance data. Alternatively, the positioning terminal device may estimate a location of another terminal device based on the assistance data. This is not specifically limited in embodiments of this application.

It may be understood that if the positioning terminal device performs location estimation on the positioning terminal device, the positioning terminal device and the target terminal device are a same terminal device. If the positioning terminal device estimates a location of another terminal, the positioning terminal device and the target terminal device are different terminal devices.

For example, an example of searching for a vehicle in a parking lot is used to describe a scenario in which the positioning terminal device and the target terminal device are different terminal devices. It is assumed that the positioning terminal device is a mobile phone carried by a user, and the target terminal device is a vehicle-mounted device deployed on a vehicle of the user. When a location of the vehicle of the user is unknown, the mobile phone may estimate a location of the vehicle-mounted device based on the assistance data, so that the user can search for the vehicle of the user based on the location information of the vehicle-mounted device.

5.2. UE-assisted positioning mode

The UE-assisted positioning mode may mean that a terminal device reports a measurement result of a positioning measurement request, but does not perform location estimation. The terminal device may report the measurement result to an LMF network element, and the LMF network element performs location estimation based on the measurement result and the assistance data. A positioning mode in which the LMF network element performs location estimation may be referred to as an LMF-based positioning mode.

6. Positioning procedure

In an NR system, a location service requester may initiate a location service request for a target terminal device. The location service requester may be a terminal device, an access and mobility management function (access and mobility management function, AMF) network element, or a location service (location service, LCS) entity of a core network. The terminal device may be a positioning terminal device, a target terminal device, or a terminal device other than the target terminal device and the positioning terminal device. This is not specifically limited in embodiments of this application.

Optionally, in this embodiment of this application, after sending the location service request, the location service requester may enable the LMF network element to trigger the positioning procedure. The positioning procedure includes a positioning capability reporting procedure of the terminal device, an assistance data transmission procedure, and a location information transmission procedure.

Optionally, in this embodiment of this application, in the foregoing positioning procedure, information may be transmitted by using a long term evolution (long term evolution, LTE) positioning protocol (LTE positioning protocol, LPP) message and/or an NR positioning protocol A (NR positioning protocol annex, NRPPa) message. For example, information may be transmitted between the LMF network element and the terminal device by using the LPP message, and information may be transmitted between the LMF network element and the network device by using the NRPPa message.

Optionally, in this embodiment of this application, information may be transmitted between the terminal device and the assisting terminal device by using a PC5 message.

6.1. Positioning capability reporting procedure of a terminal device

The positioning capability reporting procedure of the terminal device may be used to transmit positioning capability information of the terminal device between the terminal device and an LMF network element. The positioning capability information sent by the terminal device to the LMF network element may include a positioning method supported by the terminal device. The LMF network element configures an appropriate positioning method for the terminal device based on a positioning capability of the terminal device, and configures a subsequent assistance data transmission procedure and a location information transmission procedure.

6.2. Assistance data transmission procedure

The assistance data transmission procedure may be used to transmit assistance data between a terminal device and an LMF network element. The assistance data transmission procedure may be classified into an assistance data transmission procedure initiated by the terminal device (UE-initiated) and an assistance data transmission procedure initiated by the LMF network element (LMF-initiated) based on different initiating objects.

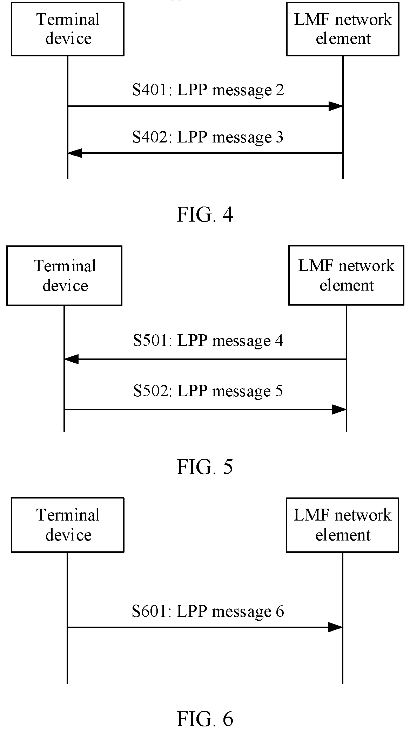

The following uses the LPP protocol as an example to describe the assistance data transmission procedure with reference to FIG. 3 and FIG. 4.

FIG. 3 is a diagram of an assistance data transmission procedure initiated by an LMF network element. As shown in FIG. 3, initiating the assistance data transmission procedure by the LMF network element includes the following.

S301: The LMF network element sends an LPP message 1 to a terminal device. Correspondingly, the terminal device receives the LPP message 1 from the LMF network element. The LPP message 1 includes assistance data.

For example, the LPP message 1 may be an LPP provide assistance data (LPP provide assistance data) message.

Optionally, in this embodiment of this application, the LMF network element may obtain the assistance data by requesting the assistance data from the network device. Alternatively, the LMF network element may pre-store the assistance data. This is not specifically limited in embodiments of this application.

FIG. 4 is a diagram of an assistance data transmission procedure initiated by a terminal device. As shown in FIG. 4, initiating the assistance data transmission procedure by the terminal device includes the following steps.

S401: The terminal device sends an LPP message 2 to an LMF network element. Correspondingly, the LMF network element receives the LPP message 2 from the terminal device. The LPP message 2 is used by the terminal device to request to obtain assistance data from the LMF network element.

For example, the LPP message 2 may be an LPP request assistance data (LPP request assistance data) message.

S402: The LMF network element sends an LPP message 3 to the terminal device. Correspondingly, the terminal device receives the LPP message 3 from the LMF network element. The LPP message 3 carries the assistance data.

For example, the LPP message 3 may be an LPP provide assistance data message.

Optionally, in this embodiment of this application, the LPP message 1 or the LPP message 3 may include different types of assistance data based on different positioning capabilities and positioning modes of the terminal device. For example, Table 1 shows assistance data that can be transmitted by the LMF network element to the terminal device in a UE-based positioning mode and a UE-assisted positioning mode in an NR system.

Table 1

| Assistance data | UE-assisted | UE-based |
| --- | --- | --- |
| One or more PCIs, one or more GCIs, and a TRP ID of a candidate NR TRP used for measurement | Supported | Supported |
| Timing relative to a serving TRP (or referred to as a reference TRP) of the candidate NR TRP | Supported | Supported |
| DL-PRS configuration of the candidate NR TRP | Supported | Supported |
| SSB information (for example, a time domain resource and/or a frequency domain resource of an SSB) | Supported | Supported |
| Spatial direction information (for example, an angle and a height) of a DL-PRS resource of one or more TRPs served by a gNB | Not supported | Supported |
| Geographic coordinates of the one or more TRPs served by the gNB (including a transmission reference location corresponding to each DL-PRS resource ID, a reference location of a transmit antenna of the reference TRP, and a relative location of the transmit antenna of another TRP) | Not supported | Supported |
| Fine timing relative to the serving (reference) TRP of the candidate NR TRP | Not supported | Supported |
| PRS-only TRP (a TRP that transmits only a PRS and that is not related to a cell) indication | Supported | Supported |
| Association information between a DL-PRS resource and a TRP transmit timing error group (timing error group, TEG) identifier | Not supported | Supported |
| LOS/NLOS indication | Not supported | Supported |
| On-demand DL-PRS configuration | Supported | Supported |

Refer to Table 1. In this embodiment of this application, the candidate TRP used for measurement may include a TRP located in a serving cell of the terminal device and/or a TRP located in a neighboring cell of the terminal device.

Optionally, in this embodiment of this application, the geographic coordinates of the TRP may be geodetic coordinates, including a longitude, a latitude, a height, or the like. Alternatively, the geographic coordinates of the TRP may be indoor coordinates. This is not specifically limited in this embodiment of this application.

Optionally, in this embodiment of this application, the LMF network element may pre-store the assistance data. Alternatively, the LMF network element may request to obtain the assistance data from the network device. This is not specifically limited in this embodiment of this application.

6.3. Location information transmission procedure

The location information transmission procedure may be used to transmit a measurement request, a location estimation request, a measurement result corresponding to the measurement request, a location estimation result corresponding to the location estimation request, and the like between a terminal device and an LMF network element. The location information transmission procedure may also be classified into a location information transmission procedure initiated by the terminal device and a location information transmission procedure initiated by the LMF network element based on different initiating objects.

The following uses the LPP protocol as an example to describe the location information transmission procedure with reference to FIG. 5 and FIG. 6.

FIG. 5 is a diagram of a location information transmission procedure initiated by an LMF network element. As shown in FIG. 5, initiating the location information transmission procedure by the LMF network element includes the following steps.

S501: The LMF network element sends an LPP message 4 to a terminal device. Correspondingly, the terminal device receives the LPP message 4 from the LMF network element. The LPP message 4 is used to request the terminal device to perform location estimation and/or measurement, and report a location estimation result and/or a measurement result.

Optionally, in this embodiment of this application, the LPP message 4 may include measurement request information, positioning mode indication information (a UE-based positioning mode or a UE-assisted positioning mode), or a quality of service parameter (for example, accuracy). The measurement request information may indicate the terminal device to perform a positioning method corresponding to measurement, and to report a measurement result corresponding to the positioning method. For example, the measurement request information may be used to request the terminal device to report a measurement result obtained by measuring a reference signal, and indicate a type of the reported measurement result, and the like. For example, the type of the measurement result may be a DL-RSTD corresponding to a DL-TDOA positioning method, an RSRP and/or an RSRPP corresponding to a DL-AOD positioning method, or a phase measurement value corresponding to carrier phase positioning. For example, the LPP message 4 may be an LPP request location information (LPP request location information) message.

It may be understood that, in different positioning modes, parameters requested by the LPP message 4 and information carried in the LPP message 4 are different. For example, if the positioning mode of the terminal device is the UE-assisted positioning mode, the LPP message 4 is used to request the terminal device to perform measurement and report a measurement result. If the positioning mode of the terminal device is the UE-based positioning mode, the LPP message 4 is used to request the terminal device (namely, a positioning terminal device) to perform location estimation and report a location estimation result.

Optionally, in this embodiment of this application, the accuracy may be accuracy or uncertainty of the location estimation result. This is not specifically limited in this embodiment of this application.

S502: The terminal device sends an LPP message 5 to the LMF network element. Correspondingly, the LMF network element receives the LPP message 5 from the terminal device. The LPP message 5 is used to transmit a location estimation result and/or a measurement result.

For example, the LPP message 5 may be an LPP provide location information (LPP provide location information) message. Table 2 shows information that may be carried in the LPP message 5 in the DL-AOD positioning method.

Table 2

| Information | UE-assisted | UE-based |
|---|---|---|
| Longitude, latitude, height, and uncertainty of a location estimation result | Not supported | Supported |
| PCI, GCI, and TRP ID for each measurement | Supported | Not supported |
| DL-PRS-RSRP measurement result | Supported | Not supported |
| Measurement timestamp (timestamp) | Supported | Not supported |
| Timestamp of location estimation | Not supported | Supported |
| DL-PRS receive beam index | Supported | Not supported |

Refer to Table 2. The measurement timestamp is an instantaneous moment at which the terminal device records a measured reference signal. The measurement timestamp may include one or more of the following: a system frame number (system frame number, SFN) corresponding to a reference signal periodicity, a subframe index of a subframe in which the reference signal is located, a slot index of a slot in which the reference signal is located, a symbol index of a symbol in which the reference signal is located, or the like.

It should be understood that, because delays of different paths of the reference signal are different, measurement timestamps may be used to distinguish between different paths, so that an RSRPP of each path may be measured. In addition, the measurement timestamp may be further used to estimate a speed of the terminal device, to obtain a location estimation result more accurately.

FIG. 6 is a diagram of a location information transmission procedure initiated by a terminal device. As shown in FIG. 6, initiating the location information transmission procedure by the terminal device includes the following step.

S601: The terminal device sends an LPP message 6 to an LMF network element. Correspondingly, the LMF network element receives the LPP message 6 from the terminal device. The LPP message 6 may include a measurement result.

For example, the LPP message 6 may be an LPP provide location information message.

It may be understood that, in carrier phase positioning in a UE-based positioning mode, a positioning terminal device may obtain, by using the location information transmission procedure, a phase measurement value corresponding to a network device, and with reference to location information (for example, geographic coordinates of the TRP in Table 1) of the network device that is transmitted in the assistance data transmission procedure, the positioning terminal device may perform location estimation based on a plurality of phase measurement values and the location information, to obtain location information (for example, geographic coordinates) of the positioning terminal device. However, in a phase measurement process of carrier phase positioning, there are non-ideal factors such as a synchronization error, a random initial phase error, a clock shift frequency offset, and an engineering parameter error of the network device. These non-ideal factors cause an error in carrier phase measurement, thereby affecting positioning accuracy.

In a possible implementation, a PRU may be introduced for assistance, to improve positioning accuracy of carrier phase positioning. The PRU may receive a reference signal from the network device, and perform phase measurement for carrier phase positioning. In this way, a phase measurement value of the terminal device may be combined with a phase measurement value of the PRU, to implement double-difference carrier phase positioning, so that the foregoing non-ideal factor is eliminated.

7. Reference device

In this embodiment of this application, the reference device may be a device whose location is known and that has a phase measurement capability and a communication capability. A type of the reference device may be a terminal device, or may be a network device. This is not specifically limited in this embodiment of this application.

Optionally, in this embodiment of this application, a location of the reference device may be mobile or fixed. This is not specifically limited in this embodiment of this application.

For example, the reference device may be the anchor terminal device, the RSU, or the PRU described in the preamble part "reference signal" of the specific implementation.

It should be understood that, in this embodiment of this application, although both an assisting terminal device and the reference device may be anchor terminal devices, RSUs, or PRUs, functions and/or actions performed between the assisting terminal device and the reference device are different. For example, the assisting terminal device is configured to send a reference signal (for example, an SL-PRS) to the terminal device and the reference device, so that the terminal device and the reference device receive the reference signal from the assisting terminal device, and perform carrier phase positioning measurement, SL-TDOA positioning measurement, SL-AOD positioning measurement, or the like.

8. Double-difference carrier phase positioning method

In this embodiment of this application, the double-difference carrier phase positioning method is to calculate a difference between a phase measurement value of a terminal device and a phase measurement value of a reference device, to eliminate the non-ideal factor described above.

For example, an example in which the reference device is a PRU, and a target terminal device and the reference device measure a reference signal from a network device is used for description. It is assumed that there is a time synchronization error and a random initial phase error, and a phase measurement value of the target terminal device relative to the network device $i$ may be determined by using formula (2). Formula (2) is as follows:

$$\varphi_t^{(i)} = \left(-2\pi f\left(\tau_t^{(i)} + \Delta_t^{(i)}\right) - \left(\phi_t - \phi^{(i)}\right)\right) - 2\pi N_t^{(i)} \qquad \text{formula (2)}$$

Refer to formula (2). $\varphi_t^{(i)}$ is a phase measurement value of the target terminal device relative to a network device

*i*, $\tau_t^{(i)}$ is a transmission delay of the target terminal device relative to the network device *i*, $\Delta_t^{(i)}$ is a time synchronization error of the network device *i*, $\varPhi_t$ is a random initial phase error of the target terminal device, $\phi^{(i)}$ is a random initial phase error of the network device *i*, $N_t^{(i)}$ is an ambiguity of whole cycles of the target terminal device relative to the network device *i*.

A phase difference of arrival (phase difference of arrival, PDOA) of the target terminal device is obtained by subtracting phase measurement values between the target terminal device and different network devices. The PDOA of the target terminal device may be determined by using formula (3). Formula (3) is as follows:

$$\varphi_t^{(ij)} = \left(\varphi_t^{(i)} - \varphi_t^{(j)}\right) = \left(-2\pi f\left(\tau_t^{(ij)} + \Delta^{(ij)}\right) - \phi^{(ij)}\right) - 2\pi N_t^{(ij)} \qquad \text{formula (3)}$$

Refer to formula (3). $\varphi_t^{(ij)}$ is a difference between a phase measurement value $\varphi_t^{(j)}$ of the target terminal device relative to a network device *j* and a phase measurement value $\varphi_t^{(i)}$ of the target terminal device relative to the network device *i*, $\tau_t^{(ij)}$ is a difference between a transmission delay $\tau_t^{(j)}$ of the target terminal device relative to the network device *j* and a transmission delay $\tau_t^{(i)}$ of the target terminal device relative to the network device *i*, $\Delta^{(ij)}$ is a difference between a time synchronization error $\Delta_t^{(j)}$ of the network device *j* and a time synchronization error $\Delta_t^{(i)}$ of the network device *i*, $\phi^{(ij)}$ is a difference between a random initial phase error $\phi^{(j)}$ of the network device *j* and a random initial phase error $\phi^{(i)}$ of the network device *i*, and $N_t^{(ij)}$ is a difference between an ambiguity of whole cycles $N_t^{(j)}$ of the target terminal device relative to the network device *j* and an ambiguity of whole cycles $N_t^{(i)}$ of the target terminal device relative to the network device *i*. The random initial phase error $\phi_t$ of the target terminal device may be eliminated by using formula (3).

Correspondingly, the PDOA of the PRU may be determined according to formula (4). Formula (4) is as follows:

$$\varphi_p^{(ij)} = \left(\varphi_p^{(i)} - \varphi_p^{(j)}\right) = \left(-2\pi f\left(\tau_p^{(ij)} + \Delta^{(ij)}\right) - \phi^{(ij)}\right) - 2\pi N_p^{(ij)} \qquad \text{formula (4)}$$

Refer to formula (4). $\varphi_p^{(ij)}$ is a difference between a phase measurement value $\varphi_p^{(j)}$ of the PRU relative to the network device *j* and a phase measurement value $\varphi_p^{(i)}$ of the PRU relative to the network device *i*, $\tau_p^{(ij)}$ is a difference between a transmission delay $\tau_p^{(j)}$ of the PRU relative to the network device *j* and a transmission delay $\tau_p^{(i)}$ of the PRU relative to the network device *i*, and $N_p^{(ij)}$ is a difference between an ambiguity of whole cycles $N_p^{(j)}$ of the PRU relative to the network device *j* and an ambiguity of whole cycles $N_p^{(i)}$ of the PRU relative to the network device *i*.

A double-difference PDOA between the PDOA of the target terminal device and the PDOA of the PRU may be obtained by subtracting formula (3) from formula (4). The double-difference PDOA may be determined by using formula (5). Formula (5) is as follows:

$$\varphi_{tp}^{(ij)} = \left(\varphi_t^{(ij)} - \varphi_p^{(ij)}\right) = \left(-2\pi f\tau_{tp}^{(ij)}\right) - 2\pi N_{tp}^{(ij)} \qquad \text{formula (5)}$$

Refer to formula (5). $\varphi_{tp}^{(ij)}$ is a difference between $\varphi_t^{(ij)}$ and $\varphi_p^{(ij)}$, $\tau_{tp}^{(ij)}$ is a difference between $\tau_t^{(ij)}$ and $\tau_p^{(ij)}$, and $N_{tp}^{(ij)}$ is a difference between $N_t^{(ij)}$ and $N_p^{(ij)}$. $\Delta^{(ij)}$ and $\phi^{(ij)}$ on the network device side may be eliminated by using formula (5). Because $\varphi_{tp}^{(ij)}$ may be obtained through measurement, after $N_{tp}^{(ij)}$ is obtained by solving, $\tau_p^{(ij)}$ may be determined by using formula (5).

It may be understood that, because a product of a transmission delay and a speed of light may be represented as a distance difference, a difference between a first distance difference and a second distance difference may be determined by using $\tau_p^{(ij)}$ in formula (5). The first distance difference is a distance difference between a distance from the network device *i* to the target terminal device and a distance from the network device *i* to the PRU, and the second distance difference is a difference between a distance from the network device *j* to the target terminal device and a distance from the network device *j* to the PRU. In other words, a plurality of double-difference PDOAs may be obtained by introducing more network devices or PRUs, and a location estimation result of the target terminal device may be obtained through solving with reference to location information of the PRU and location information of the network device.

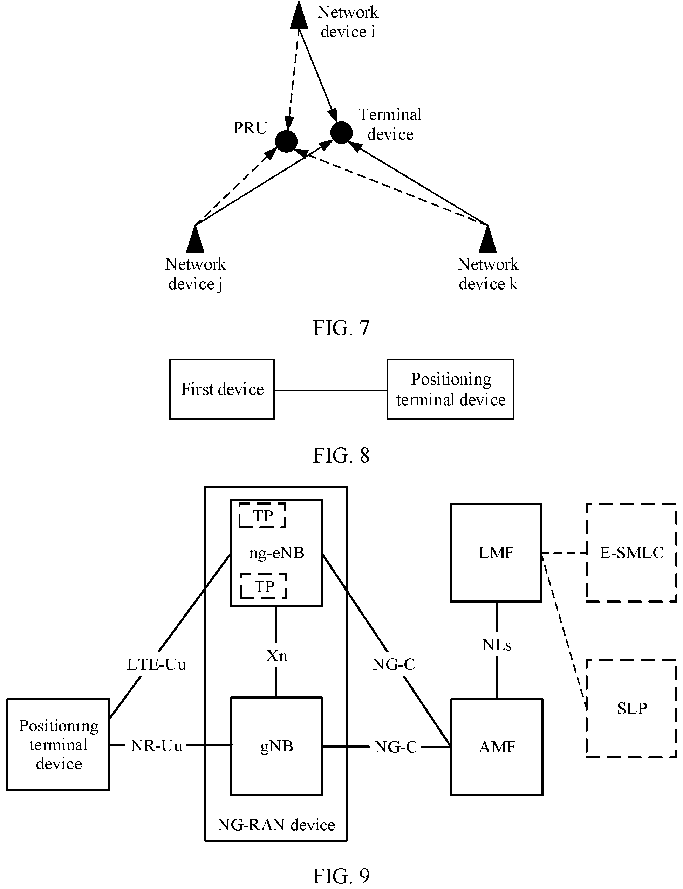

FIG. 7 is a diagram of double-difference carrier phase positioning according to an embodiment of this application. As shown in FIG. 7, based on the PRU, the network device *i,* and the network device *j* that are introduced in formula (2) to formula (5), if the network device *k* is introduced, a double-difference PDOA between the network device *k* and the network device *i,* or a double-difference PDOA between the network device *k* and the network device *j* may be determined by using the foregoing formula (2) to formula (5). By using the two double-difference PDOAs and with reference to locations of the PRU, the network device *i,* the network device *j,* and the network device *k,* a location estimation result of the target terminal device may be obtained, and an error caused by the foregoing non-ideal factor is eliminated.

However, as described in the foregoing related descriptions of the "assistance data transmission procedure" and the "location information transmission procedure", in the UE-based positioning mode, the positioning terminal device can obtain only location information of a positioning assisting node (for example, the network device or the assisting terminal device) and a phase measurement value corresponding to carrier phase positioning of the positioning terminal device, and the positioning terminal device cannot obtain a phase measurement value of the reference device, and consequently, double-difference carrier phase positioning cannot be achieved to eliminate an error caused by the foregoing non-ideal factor, and positioning precision of carrier phase positioning cannot be improved either.

In view of this, an embodiment of this application provides an information sending and receiving method, a UE-based carrier phase positioning method can be optimized, so that a terminal device (namely, a positioning terminal device) supports high-precision carrier phase positioning.

The following describes the technical solutions in embodiments of this application with reference to the accompanying drawings in embodiments of this application. In the descriptions of this application, unless otherwise specified, "/" indicates that associated objects are in an "or" relationship. For example, A/B may represent A or B. The term "and/or" in this application describes only an association relationship for describing associated objects and represents that three relationships may exist. For example, A and/or B may represent the following three cases: Only A exists, both A and B exist, and only B exists. A and B each may be singular or plural. In addition, in the descriptions of this application, unless otherwise specified, "a plurality of" means two or more than two. "At least one of the following items (pieces)" or a similar expression thereof means any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

In embodiments of this application, "indication" may include a direct indication and an indirect indication, or may include an explicit indication and an implicit indication. Information indicated by a piece of information (for example, the following first indication information or second indication information) is referred to as to-be-indicated information. In a specific implementation process, the to-be-indicated information is indicated in a plurality of manners. By way of example and not limitation, the to-be-indicated information may be directly indicated, for example, the to-be-indicated information or an index of the to-be-indicated information is indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, stipulated in a protocol), to reduce indication overheads to a specific extent.

In addition, the network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

The technical solutions in embodiments of this application may be applied to a 5th generation (5th generation, 5G) system or an NR system. The technical solutions in embodiments of this application may also be applied to another communication system, for example, an LTE system, an LTE frequency division duplex (frequency division duplex, FDD) system, an LTE time division duplex (time division duplex, TDD) system, a universal mobile telecommunications system (universal mobile telecommunications system, UMTS), or a worldwide interoperability for microwave access (worldwide interoperability for microwave access, WiMAX) communication system. The 5G system in this application includes an NR system in non-standalone (non-standalone, NSA) networking or an NR system in standalone (standalone, SA) networking. The technical solutions provided in this application may be further applied to a future communication system, for example, a 6th generation mobile communication system. Alternatively, the communication system may be a public land mobile network (public land mobile network, PLMN), a D2D communication system, a machine to machine (machine to machine, M2M) communication system, an internet of things (Internet of Things, IoT) communication system, or another communication system.

FIG. 8 is a diagram of an architecture of a communication system corresponding to an information sending and receiving method according to an embodiment of this application. As shown in FIG. 8, the communication system includes a first device and a positioning terminal device. The first device may be a location management network element or a reference device. The first device may directly communicate with the positioning terminal device, or may communicate with the positioning terminal device through forwarding by another device. This is not specifically limited in embodiments of this application.

The following uses an example in which the first device interacts with the positioning terminal device for description.

In a possible implementation, the first device obtains first information, and sends the first information to the positioning terminal device. The first information includes phase information obtained by the reference device by measuring a reference signal, and the first information is used for positioning.

Specific implementations of the foregoing solutions are described in detail in the following embodiments. Details are not described herein.

In this embodiment of this application, the first information may include the phase information obtained by the reference device by measuring the reference signal. Therefore, after receiving the first information, the positioning terminal device may support, in a UE-based positioning mode, the positioning terminal device in performing double-difference carrier phase positioning by using the phase information in the first information, so that a carrier phase measurement error caused by non-ideal factors such as a synchronization error, a random initial phase error, a clock shift frequency offset, and an engineering parameter error of a positioning assisting node (for example, a network device or an assisting terminal device) is eliminated through double-difference carrier phase positioning. In this way, positioning accuracy is improved. Therefore, based on the information sending and receiving method provided in this embodiment of this application, a UE-based carrier phase positioning method can be optimized, so that the positioning terminal device supports high-precision carrier phase positioning.

Optionally, the location management network element in this embodiment of this application may be an LMF network element, a location manager unit (location manager unit, LMU), a location management component (location management component, LMC), an LMC integrated on a RAN side, a local location management function (local location management function, LLMF) network element located in an NG-RAN device, an enhanced serving mobile location center (enhanced serving mobile location center, E-SMLC), a secure user plane location platform (secure user plane location platform, SLP), a positioning server, a navigation server, or the like, or may be a chip (system) that can be disposed in an LMF network element, an E-SMLC, an SLP, a positioning server, or a navigation server, or another component that has a function of the location management network element.

Optionally, the network device (including a first network device, a second network device, or the like) in embodiments of this application may be any communication device that has a wireless transceiver function and that is configured to communicate with a terminal device (for example, the positioning terminal device or the reference device). The network device includes but is not limited to an eNB, a baseband unit (baseband unit, BBU), an access point (access point, AP) in a Wi-Fi system, a wireless relay node, a wireless backhaul node, and the like. The network device may alternatively be one or a group of (including a plurality of antenna panels) antenna panels of a base station in an NR system. In addition, the network device may alternatively be a network device that forms a gNB or a TP, for example, a BBU or a distributed unit (distributed unit, DU).

In some deployments, a gNB may include a central unit (central unit, CU) and a DU. In addition, the gNB may further include an active antenna unit (active antenna unit, AAU). The CU implements some functions of the gNB, and the DU implements some functions of the gNB. For example, the CU is responsible for processing a non-real-time protocol and a service, and implementing functions of an RRC and a packet data convergence protocol (packet data convergence protocol, PDCP) layer. The DU is responsible for processing a physical layer protocol and a real-time service, and implements functions of a radio link control (radio link control, RLC) layer, a medium access control (media access control, MAC) layer, and a physical (physical, PHY) layer. The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the network device may be a device including one or more of a CU node, a DU node, and an AAU node.

Optionally, the terminal device (including the positioning terminal device, the target terminal device, a first assisting terminal device, a second assisting terminal device, or the like) in embodiments of this application may be an access terminal, a subscriber unit, a subscriber station, a mobile station, a relay station, a remote station, a remote terminal, a mobile device, UE, a terminal (terminal), a wireless communication device, a user agent, a user apparatus, a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device, another processing device connected to a wireless modem, a vehicle-mounted device, a wearable device, a terminal device in a future NR network, a terminal device in a future evolved PLMN, a terminal device in a future internet of vehicles, or the like. This is not limited in embodiments of this application.

By way of example and not limitation, in embodiments of this application, the terminal device may be a mobile phone, a tablet computer, a computer having a wireless transceiver function, a virtual reality terminal device, an augmented reality terminal device, a wireless terminal in industrial control, a wireless terminal in self-driving, a wireless terminal in remote surgery, a wireless terminal in a smart grid, a wireless terminal in transportation safety, a wireless terminal in a smart city, a wireless terminal in a smart home, or the like.

By way of example and not limitation, in embodiments of this application, the wearable device may also be referred to as a wearable intelligent device, and is a general name of wearable devices such as glasses, gloves, watches, clothing, and shoes developed by intelligently designing daily wear by using a wearable technology. The wearable device is a portable device that can be directly worn on the body or integrated into clothes or an accessory of a user. The wearable device is not only a hardware device, but also implements a powerful function through software support, data exchange, and cloud interaction. In a broad sense, wearable smart devices include full-featured and large-size devices that can implement complete or partial functions without depending on smartphones, for example, smart watches or smart glasses, and devices that focus on only one type of application function and need to be used together with other devices such as smartphones, for example, various smart bands or smart jewelry used for monitoring physical signs.

In addition, the terminal device in embodiments of this application may alternatively be a terminal device in an IoT system. IoT is an important part of future development of information technologies. A main technical feature of the IoT is connecting a thing to a network by using a communication technology, to implement an intelligent network for interconnection between a person and a machine or between things. In embodiments of this application, the IoT technology can implement massive connections, deep coverage, and terminal power saving by using, for example, a narrowband (narrowband, NB) technology.

In addition, in embodiments of this application, the terminal device may alternatively include a sensor like an intelligent printer, a train detector, or a gas station. Main functions include collecting data (some terminal devices), receiving control information and downlink data from a network device, sending an electromagnetic wave, and transmitting uplink data to the network device.

Optionally, the network device and the terminal device in embodiments of this application may communicate with each other by using a licensed spectrum, may communicate with each other by using an unlicensed spectrum, or may communicate with each other by using both a licensed spectrum and an unlicensed spectrum. The network device and the terminal device may communicate with each other by using a spectrum below 6 gigahertz (gigahertz, GHz), may communicate with each other by using a spectrum above 6 GHz, or may communicate with each other by using both a spectrum below 6 GHz and a spectrum above 6 GHz. A spectrum resource used between the network device and the terminal device is not limited in embodiments of this application.

Optionally, the terminal device or the network device in embodiments of this application may be deployed on land, including an indoor or outdoor device, a handheld device, or a vehicle-mounted device; or may be deployed on a water surface; or may be deployed on a plane, a balloon, or an artificial satellite in the air. Application scenarios of the terminal device or the network device are not limited in embodiments of this application.

As described above, the information sending and receiving method provided in this embodiment of this application may be applied to the foregoing various communication systems.

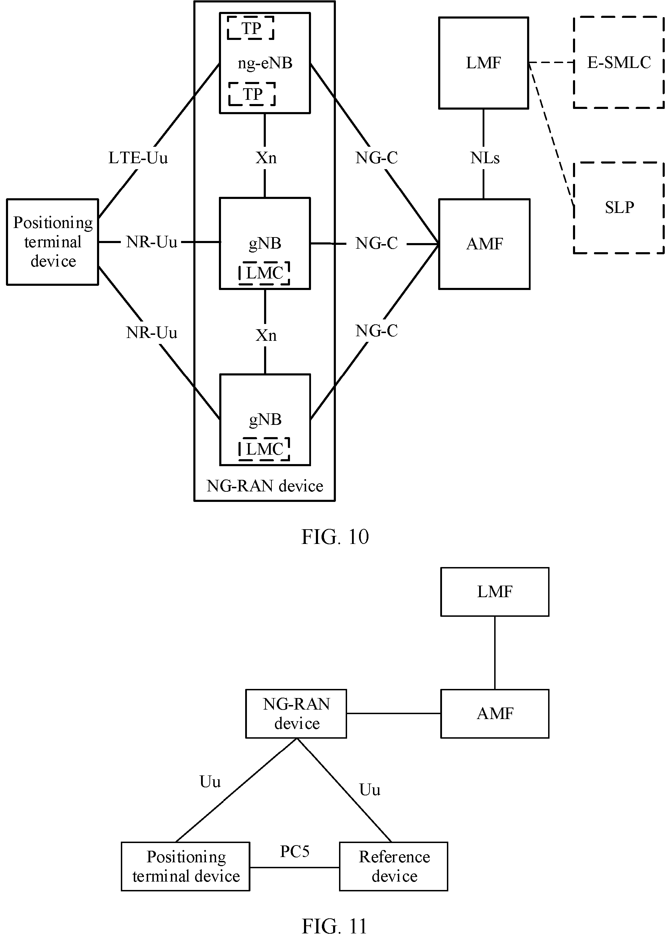

For example, FIG. 9 or FIG. 10 is a diagram of a relationship between a positioning terminal device, an NG-RAN device, an LMF network element, and an AMF network element when an information sending and receiving method according to an embodiment of this application is applied to an NR system. As shown in FIG. 9 or FIG. 10, the terminal device is connected to the NG-RAN device through a ng-eNB and a gNB over an LTE-Uu interface and/or an NR-Uu interface. The NG-RAN device is connected to a 5G core (5G core, 5GC) network over an NG-C interface. The NG-RAN device includes one or more ng-eNBs (one ng-eNB is used as an example in FIG. 9 or FIG. 10); or the NG-RAN device may include one or more gNBs (one gNB is used as an example in FIG. 9, and two gNBs are used as an example in FIG. 10). The ng-eNB is an LTE base station accessing the 5GC, and the gNB is a 5G base station accessing the 5GC. The 5GC includes an AMF network element and an LMF network element. The AMF network element is configured to implement functions such as access management, and the LMF network element is configured to interact with the positioning terminal device or the NG-RAN device to implement various functions (for example, a positioning function). The AMF network element is connected to the LMF network element over an NLs interface.

Further, an interface between control planes of the 5GC and the NG-RAN device is an N2 interface, an interface between user planes of the 5GC and the NG-RAN is an N3 interface, and an interface between gNBs is an Xn interface.

Optionally, as shown in FIG. 9 or FIG. 10, the 5GC may further include an E-SMLC and an SLP. The E-SMLC and the SLP are separately connected to the LMF network element. The E-SMLC and the SLP may provide the LMF network element with assistance data (for example, the assistance data shown in Table 1) required by the positioning terminal device, to facilitate carrier phase positioning.

It may be understood that FIG. 10 is similar to FIG. 9. For example, a difference lies in that the location management function apparatus or component (for example, the LMF network element) in FIG. 9 is deployed in the 5GC, and the location management function apparatus or component (for example, the LMC) in FIG. 10 may be deployed in the NG-RAN device. As shown in FIG. 10, the gNB includes the LMC. The LMC is a partial functional component of the LMF network element and can be integrated into the gNB of the NG-RAN device.

It should be understood that FIG. 9 or FIG. 10 is merely an example of a diagram of a relationship between the positioning terminal device, the NG-RAN device, the LMF network element, and the AMF network element when the information sending and receiving method in this embodiment of this application is applied to a 5G communication system, and does not constitute a limitation that only one NG-RAN device is included.

For example, FIG. 11 is a diagram of a relationship between a positioning terminal device, a reference device, an NG-RAN device, an LMF network element, and an AMF network element when an information sending and receiving method according to an embodiment of this application is applied to an NR system. As shown in FIG. 11, a difference between FIG. 11 and FIG. 10 or FIG. 9 lies in that the positioning terminal device is directly connected to the reference device over a PC5 interface. A related specification of the PC5 interface is specified in a sidelink (sidelink, SL) protocol. For details, refer to the SL protocol. Details are not described herein again.

It should be understood that the device or the functional node included in FIG. 9 to FIG. 11 is merely an example for description, and does not constitute a limitation on embodiments of this application. Actually, FIG. 9 to FIG. 11 may further include another network element, device, or functional node that has an interaction relationship with the device or the functional node shown in the figure. This is not specifically limited in this application.

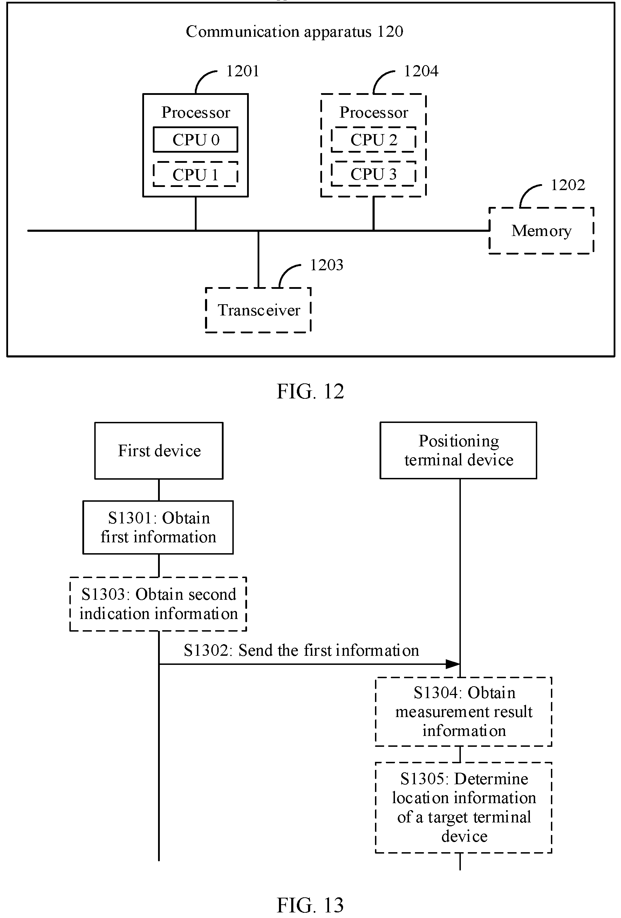

FIG. 12 is a diagram of a structure of a communication apparatus 120 that may be configured to perform an information sending and receiving method according to an embodiment of this application. The communication apparatus 120 may be a first device or a positioning terminal device, or may be a chip or a component used in the first device or the positioning terminal device.

As shown in FIG. 12, the communication apparatus 120 may include a processor 1201. Optionally, the communication apparatus 120 may further include one or more of a memory 1202 and a transceiver 1203. The processor 1201 and the one or more of the memory 1202 and the transceiver 1203 may be coupled, for example, may be connected through a communication bus, or the processor 1201 may be independently used.

The following describes in detail each component of the communication apparatus 120 with reference to FIG. 12.

The processor 1201 is a control center of the communication apparatus 120, and may be one processor or may be a general name of a plurality of processing elements. For example, the processor 1201 is one or more central processing units (central processing units, CPUs), may be an application-specific integrated circuit (application-specific integrated circuit, ASIC), or is configured as one or more integrated circuits for implementing embodiments of this application, for example, one or more microprocessors (digital signal processors, DSPs) or one or more field programmable gate arrays (field programmable gate arrays, FPGAs).

The processor 1201 may perform various functions of the communication apparatus 120 by running or executing a software program stored in the memory 1202 and invoking data stored in the memory 1202.

During specific implementation, in an embodiment, the processor 1201 may include one or more CPUs, for example, a CPU 0 and a CPU 1 in FIG. 12.

During specific implementation, in an embodiment, the communication apparatus 120 may alternatively include a plurality of processors, for example, the processor 1201 and a processor 1204 shown in FIG. 12. Each of the processors may be a single-core processor (single-CPU) or may be a multi-core processor (multi-CPU). The processor herein may be one or more communication devices, circuits, and/or processing cores configured to process data (for example, computer program instructions).

The memory 1202 may be a read-only memory (read-only memory, ROM) or another type of static storage communication device that can store static information and instructions, or a random access memory (random access memory, RAM) or another type of dynamic storage communication device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, and the like), a magnetic disk storage medium or another magnetic storage communication device, or any other medium that can carry or store expected program code in an instruction form or a data structure form and that can be accessed by a computer. However, the memory 1202 is not limited thereto. The memory 1202 may be integrated with the processor 1201, or may exist independently, and is coupled to the processor 1201 through an input/output port (not shown in FIG. 12) of the communication apparatus 120. This is not specifically limited in embodiments of this application.

The memory 1202 is configured to store a software program for implementing solutions of this application, and the processor 1201 controls the implementation. For a specific implementation, refer to the method embodiments. Details are not described herein again.

The transceiver 1203 is configured to communicate with another communication apparatus. For example, the communication apparatus 120 is the first device, and the transceiver 1203 may be configured to communicate with the positioning terminal device. In addition, the transceiver 1203 may include a receiver and a transmitter (not separately shown in FIG. 12). The receiver is configured to implement a receiving function, and the transmitter is configured to implement a sending function. The transceiver 1203 may be integrated with the processor 1201, or may exist independently, and is coupled to the processor 1201 through an input/output port (not shown in FIG. 12) of the communication apparatus 120. This is not specifically limited in embodiments of this application.

It should be noted that the structure of the communication apparatus 120 shown in FIG. 12 does not constitute a limitation on the communication apparatus. An actual communication apparatus may include more or fewer components than those shown in the figure, combine some components, or have different component arrangements.

It should be noted that, a specific structure of an execution body of the method provided in embodiments of this application is not specifically limited in embodiments of this application, provided that communication can be performed according to the method provided in embodiments of this application by running a program that records code of the method provided in embodiments of this application. For example, the method provided in embodiments of this application may be performed by the first device or the positioning terminal device, or a functional module that can invoke and execute a program in the first device or the positioning terminal device.

In other words, a related function of the first device or the positioning terminal device in embodiments of this application may be implemented by one device, or may be jointly implemented by a plurality of devices, or may be implemented by one or more functional modules in one device. This is not specifically limited in embodiments of this application. It may be understood that the foregoing function may be a network element in a hardware device, a software function running on special-purpose hardware, a combination of hardware and software, or a virtualization function instantiated on a platform (for example, a cloud platform).

The following describes in detail the information sending and receiving method provided in this embodiment of this application with reference to FIG. 1 to FIG. 12.

It should be noted that names of messages between network elements, names of parameters in the messages, or the like in the following embodiments of this application are merely examples, and there may be other names in a specific implementation. This is not specifically limited in embodiments of this application.

Interaction between the first device and the positioning terminal device shown in FIG. 8 is used as an example. FIG. 13 shows an information sending and receiving method according to an embodiment of this application. The method includes the following steps.

S1301: A first device obtains first information. The first information includes phase information obtained by a reference device by measuring a reference signal. The first information is used for positioning.

S1302: The first device sends the first information to a positioning terminal device. Correspondingly, the positioning terminal device receives the first information from the first device.

The following describes steps S1301 and S1302 in detail.

For step S1301,

optionally, in this embodiment of this application, the first device may be a location management network element or a reference device. Related descriptions of the location management network element and the reference device have been described in detail above. For details, refer to the foregoing related descriptions of the "location management network element" and the "reference device". Details are not described herein again.

Optionally, in this embodiment of this application, that a reference device measures a reference signal may mean that the reference device measures a reference signal from a positioning assisting node based on a reference signal resource. For related descriptions of the reference signal resource, refer to content corresponding to the "configuration information of the reference signal" in the preamble of the specific implementation. Details are not described herein again.

Optionally, in this embodiment of this application, the phase information may include one or more of the following:

a first phase measurement value, where the first phase measurement value is a phase measurement value obtained by the reference device by measuring a reference signal of a first positioning assisting node based on a first reference signal resource;

a second phase measurement value, where the second phase measurement value is a phase measurement value obtained by the reference device by measuring the reference signal of the first positioning assisting node based on a second reference signal resource;

a third phase measurement value, where the third phase measurement value is a phase measurement value obtained by the reference device by measuring a reference signal of a second positioning assisting node based on a third reference signal resource;

a fourth phase measurement value, where the fourth phase measurement value is a phase measurement value obtained by the reference device by measuring the reference signal of the second positioning assisting node based on a fourth reference signal resource;

a difference between the first phase measurement value and the second phase measurement value;

a difference between the first phase measurement value and the third phase measurement value;

a difference between the first phase measurement value and the fourth phase measurement value;

a difference between the second phase measurement value and the third phase measurement value;

a difference between the second phase measurement value and the fourth phase measurement value; or

a difference between the third phase measurement value and the fourth phase measurement value.

Each of the first phase measurement value to the fourth phase measurement value may be the "phase measurement value" in the preamble part of the specific implementation. For details, refer to the descriptions in the preamble part. Details are not described herein again.

Optionally, in this embodiment of this application, the phase measurement value may alternatively be any one of the following: an intermediate radio frequency phase measurement value, a baseband frequency domain phase measurement value, or a baseband time domain phase measurement value.

The intermediate radio frequency phase measurement value may be a phase measurement value that is directly output by a PLL after frequency locking is performed by the phase locked loop (phase locked loop, PLL) on a received reference signal.

The baseband frequency domain phase measurement value is a phase measurement value of a frequency, namely, a phase corresponding to a complex coefficient of a CFR, where the channel frequency response (channel frequency response, CFR) is obtained by performing channel estimation on a baseband based on a received reference signal.

The baseband time domain phase measurement value is a phase measurement value of a center frequency, namely, a phase of a complex coefficient corresponding to a first path/an LOS path of a CIR, where the channel impulse response (channel impulse response, CIR) is obtained by performing channel estimation on a baseband based on a received reference signal. For related descriptions of the first path and the LOS path, refer to related descriptions of the "path" in the preamble part of the specific embodiment. Details are not described herein again.

Optionally, in this embodiment of this application, the first positioning assisting node may be a first network device or a first assisting terminal device. The second positioning assisting node may be a second network device or a second assisting terminal device. When the first positioning assisting node is the first network device, the first reference signal resource is a first DL-PRS resource, and the second reference signal resource is a second DL-PRS resource. When the second positioning assisting node is the second network device, the third reference signal resource may be a third DL-PRS resource, and the fourth reference signal resource may be a fourth DL-PRS resource.

It may be understood that, when the first positioning assisting node is the first assisting terminal device, the first reference signal resource may be a first SL-PRS resource, and the second reference signal resource may be a second SL-PRS resource. When the second positioning assisting node is the second assisting terminal device, the third reference signal resource may be a third SL-PRS resource, and the fourth reference signal resource may be a fourth SL-PRS resource.

Optionally, in this embodiment of this application, the phase information may be in a form of no difference. The phase information in the form of no difference may be one or more of the following phase information: the first phase measurement value and the second phase measurement value; the first phase measurement value and the third phase measurement value; the first phase measurement value and the fourth phase measurement value; the second phase measurement value and the third phase measurement value; the second phase measurement value and the fourth phase measurement value; the third phase measurement value and the fourth measurement value; the first phase measurement value, the second phase measurement value, and the third phase measurement value; the first phase measurement value, the second phase measurement value, and the fourth phase measurement value; the first phase measurement value, the third phase measurement value, and the fourth phase measurement value; the second phase measurement value, the third phase measurement value, and the fourth phase measurement value; or the first phase measurement value, the second phase measurement value, the third phase measurement value, and the fourth phase measurement value.

In other words, the positioning terminal device receives the phase information in the form of no difference from the first device, and the positioning terminal device may perform subtraction on a plurality of phase values in the phase information, to obtain the corresponding PDOA of the reference device in formula (4).

Alternatively, optionally, in this embodiment of this application, the phase information may be in a form of PDOA. To be specific, the phase information may include a PDOA between different reference signal resources of a same positioning assisting node, or a PDOA between different reference signal resources of different positioning assisting nodes. The PDOA between different reference signal resources of a same positioning assisting node may be, for example, the difference between the first phase measurement value and the second phase measurement value, or the difference between the third phase measurement value and the fourth phase measurement value. The PDOA between different positioning assisting nodes of different reference signal resources may be, for example, the difference between the first phase measurement value and the third phase measurement value, the difference between the first phase measurement value and the fourth phase measurement value, the difference between the second phase measurement value and the third phase measurement value, the difference between the second phase measurement value and the fourth phase measurement value, or the difference between the third phase measurement value and the fourth phase measurement value.

It should be understood that, in this embodiment of this application, the first positioning assisting node may be used as a reference positioning assisting node, and the second positioning assisting node may be used as a non-reference positioning assisting node. The first phase measurement value or the second phase measurement value corresponding to the first positioning assisting node may be used as a subtracted phase measurement value in the PDOA. There may be a plurality of second positioning assisting nodes, so that a plurality of PDOAs may be obtained based on the phase information by using a phase measurement value corresponding to the first positioning assisting node as the subtracted phase measurement value.

It should be further understood that the first positioning assisting node may be used as a non-reference positioning assisting node, and the second positioning assisting node may be used as a reference positioning assisting node. There may be a plurality of first positioning assisting nodes, so that a plurality of PDOAs may be obtained based on the phase information by using a phase measurement value corresponding to the second positioning assisting node as a subtracted phase measurement value.

It may be understood that, with reference to the foregoing related descriptions of the "assistance data transmission procedure" and the "location information transmission procedure", in a UE-based positioning mode, the positioning terminal device may obtain location information of a network device by using the "assistance data transmission procedure", and obtain positioning measurement result information (for example, a carrier phase measurement result) by using an LPP request location information message in the "location information transmission procedure". In other words, the positioning terminal device may obtain a PDOA of the reference device by using the phase information of the reference device in the first information, so that the positioning terminal device can obtain a double-difference PDOA, to support the positioning terminal device in performing double-difference carrier phase positioning.

Optionally, in this embodiment of this application, the first information may further include one or more of the following:
identification information of a positioning assisting node for sending the reference signal, identification information of the reference signal, configuration information of the reference signal, measurement time information for measuring the reference signal by the reference device, an RSTD obtained by the reference device by measuring the reference signal, AOD information between the reference device and the positioning assisting node for sending the reference signal, or location information of the reference device. The positioning assisting node for sending the reference signal may be the first positioning assisting node and the second positioning assisting node. The configuration information of the reference signal includes identification information of a reference signal resource corresponding to the reference signal.

Optionally, in this embodiment of this application, the identification information of the reference signal resource may include a reference signal resource identifier and/or a reference signal resource set identifier.

Optionally, in this embodiment of this application, the identification information of the positioning assisting node for sending the reference signal, the identification information of the reference signal, or the configuration information of the reference signal may be used to identify an association relationship between a phase measurement value in the phase information and the positioning assisting node for sending the reference signal. In other words, the positioning terminal device may determine, based on the identification information of the positioning assisting node for sending the reference signal, the identification information of the reference signal, or the configuration information of the reference signal, a phase measurement value corresponding to each positioning assisting node, so as to obtain a PDOA (for example, the difference between the first phase measurement value and the fourth phase measurement value) by the positioning terminal device.

It may be understood that, in a case in which the reference device measures the reference signal of the first positioning assisting node and the reference signal of the second positioning assisting node, and the phase information obtained by the reference device by measuring the reference signal is the PDOA, the phase information obtained by the reference device by measuring the reference signal may not include the identification information of the positioning assisting node.

Optionally, in this embodiment of this application, the identification information of the positioning assisting node for sending the reference signal may include identification information of the first positioning assisting node and identification information of the second positioning assisting node. For example, when the first positioning assisting node is the first network device, the identification information of the first positioning assisting node may be a TRP ID or a DL-PRS-ID. When the first positioning assisting node is the first assisting terminal device, the identification information of the first positioning assisting node may be an identifier of the first assisting terminal device, or other information that may be used to identify the first assisting terminal device. This is not specifically limited in embodiments of this application.

Optionally, in this embodiment of this application, the reference signal may include a reference signal sent by the first positioning assisting node and/or a reference signal sent by the second positioning assisting node. The reference signal sent by the first positioning assisting node may include a reference signal sent by the first positioning assisting node based on the first reference signal resource, and/or a reference signal sent by the first positioning assisting node based on the second reference signal resource. The reference signal sent by the second positioning assisting node may include a reference signal sent by the second positioning assisting node based on the third reference signal resource, and/or a reference signal sent by the second positioning assisting node based on the fourth reference signal resource.

For example, in this embodiment of this application, the first information may include:

a TRP ID of the first network device and a TRP ID of the second network device (for example, the TRP ID may be represented with dl-PRS-ID-r16);
a PCI corresponding to a cell in which the first network device sends a reference signal and a PCI (the PCI may be, for example, nr-physCellID-r16) corresponding to a cell in which the second network device sends a reference signal;
identification information of the first reference signal resource and identification information (for example, nr-DL-PRS-ResourceID-r16 and/or nr-DL-PRS-ResourceSetID-r16) of the third reference signal resource;
measurement time information (for example, nr-TimeStamp-r16) for measuring the reference signal by the reference device; and
a difference between the first phase value and the fourth phase value.

Optionally, in this embodiment of this application, the measurement time information for measuring the reference signal by the reference device includes a moment and/or a time period for receiving the reference signal by the reference device. The moment at which the reference device receives the reference signal may be a measurement timestamp. For the measurement timestamp, refer to related descriptions of the "measurement timestamp" in the preamble part of the specific implementation. Details are not described herein again.

Optionally, in this embodiment of this application, the time period in which the reference device receives the reference signal may indicate validity time (or use time) of the phase information. In other words, when performing double-difference carrier phase positioning, the positioning terminal device may determine, based on the time period in which the reference device receives the reference signal, whether the phase information is invalid.

Optionally, in this embodiment of this application, the time period in which the reference device receives the reference signal may further indicate an RSTD obtained by the reference device by measuring the reference signal and/or validity time of AOD information between the reference device and the positioning assisting node for sending the reference signal.

Optionally, in this embodiment of this application, the time period in which the reference device receives the reference signal may be a time period range.

For example, it is assumed that the moment at which the reference device receives the reference signal is t, and the valid use time of the phase information is 10 ms, the time period in which the reference device receives the reference signal may be represented as [t-5 ms, t+5 ms] or [t, t+10 ms]. The moment at which the reference device receives the reference signal may alternatively be represented by using at least one of an SFN index, a subframe index, a slot index, or a symbol index.

Alternatively, optionally, in this embodiment of this application, the time period in which the reference device receives the reference signal may indicate one or more of the following: random initial phase stabilization time of the positioning assisting node for sending the reference signal; clock shift stabilization time of the positioning assisting node for sending the reference signal; frequency offset stabilization time of the positioning assisting node for sending the reference signal; or phase stabilization time for sending the reference signal.

The random initial phase stabilization time of the positioning assisting node may be time elapsed from a moment at which the positioning assisting node sends a reference signal until a variation of a random initial phase value of the positioning assisting node is greater than or equal to a first threshold. For example, the first threshold may be 5°, 10°, or 20°. This is not specifically limited in embodiments of this application.

Optionally, the random initial phase stabilization time of the positioning assisting node for sending the reference signal may include one or more of the following:

first random initial phase stabilization time of the first positioning assisting node;

second random initial phase stabilization time of the second positioning assisting node;

a minimum value between the first random initial phase stabilization time and the second random initial phase stabilization time; or

a time value between the first random initial phase stabilization time and the second random initial phase stabilization time.

The clock shift stabilization time of the positioning assisting node may be time elapsed from a moment at which the positioning assisting node sends a reference signal until a clock shift of the positioning assisting node is greater than or equal to a second threshold. For example, the second threshold may be 0.01 ppm, 0.02 ppm, or 0.1 ppm. This is not specifically limited in embodiments of this application.

Optionally, the clock shift stabilization time of the positioning assisting node for sending the reference signal may include one or more of the following:

first clock shift stabilization time of the first positioning assisting node;

second clock shift stabilization time of the second positioning assisting node;

a minimum value between the first clock shift stabilization time and the second clock shift stabilization time; or

a time value between the first clock shift stabilization time and the second clock shift stabilization time.

The frequency offset stabilization time may be time elapsed from a moment at which the positioning assisting node sends a reference signal until a frequency offset of the positioning assisting node is greater than or equal to a third threshold. For example, the third threshold may be 5 Hz, 10 Hz, or 20 Hz. This is not specifically limited in embodiments of this application.

Optionally, the frequency offset stabilization time of the positioning assisting node for sending the reference signal may include one or more of the following:

first frequency offset stabilization time of the first positioning assisting node;

second frequency offset stabilization time of the second positioning assisting node;

a minimum value between the first frequency offset stabilization time and the second frequency offset stabilization time; or

a time value between the first frequency offset stabilization time and the second frequency offset stabilization time.

The phase stabilization time of the reference signal may be time elapsed from a moment at which the positioning assisting node sends a reference signal until a phase variation of the reference signal sent by the positioning assisting node is greater than or equal to a fourth threshold. For example, the fourth threshold may be 5°, 10°, or 20°. This is not specifically limited in embodiments of this application.

Optionally, the phase stabilization time of the reference signal may include one or more of the following:

first phase stabilization time for the reference signal sent by the first positioning assisting node;

second phase stabilization time for the reference signal sent by the second positioning assisting node;

a minimum value between the first phase stabilization time and the second phase stabilization time; or

a time value between the first phase stabilization time and the second phase stabilization time.

Optionally, in this embodiment of this application, there may be a plurality of reference devices. The first information may include phase information obtained by each of the plurality of reference devices by measuring the reference signal. It may be understood that, when the positioning terminal device receives phase information from a plurality of reference devices, the positioning terminal device may determine a plurality of double-difference PDOAs according to formula (5), and then perform location estimation with reference to the plurality of double-difference PDOAs, so that precision of a location estimation result is improved.

Optionally, in this embodiment of this application, the first information may further include an RSTD obtained by each of the plurality of reference devices by measuring the reference signal, and/or AOD information between each of the plurality of reference devices and the positioning assisting node for sending the reference signal.

Optionally, in this embodiment of this application, the first information may further include measurement time information for measuring the reference signal by each of the plurality of reference devices.

Optionally, in this embodiment of this application, the first information further includes location information of the plurality of reference devices and/or first indication information. The location information of the plurality of reference devices includes location information of each of the plurality of reference devices. The first indication information indicates a priority of each of the plurality of reference devices. The priority may indicate a sequence in which the positioning terminal device selects the phase information corresponding to the reference device to perform double-difference carrier phase positioning. For example, the plurality of reference devices include a reference device #1, a reference device #2, and a reference device #3. It is assumed that a priority of the reference device #1 is the lowest, and a priority of the reference device #2 is lower than a priority of the reference device #3. When performing double-difference carrier phase positioning, the positioning terminal device preferably selects phase information corresponding to the reference device #3 to perform location estimation.

Optionally, in this embodiment of this application, the first device may determine the priority of each reference device based on a neighboring degree between a cell in which the positioning terminal device is located and a cell in which each reference device is located. A priority of a reference device located in a same cell as the positioning terminal device is higher than a priority of a reference device located in a neighboring cell of the positioning terminal device. A shorter distance between the reference device and the positioning terminal device indicates that an error (for example, a synchronization error and a random initial phase error) corresponding to the positioning terminal device in carrier phase positioning measurement is closer to an error corresponding to the reference device. Therefore, effect of eliminating an error by using a double-difference PDOA in double-difference carrier phase positioning is better, and positioning precision is higher. In other words, the first device may enable, based on the priority in the first indication information, the positioning terminal device to preferably select phase information corresponding to a reference device that is close to the positioning terminal device, to perform double-difference carrier phase positioning, so that positioning precision is improved.

Optionally, in this embodiment of this application, when there are a plurality of reference devices, and the first information includes phase information obtained by each of the plurality of reference devices by measuring the reference signal, the first device may be a target reference device. The target reference device may be a reference device that is in the plurality of reference devices and that is located in a same cell as the positioning terminal device. The target reference device may obtain phase information of a reference device other than the target reference device in the plurality of reference devices.

For example, each of the plurality of reference devices may send phase information of each reference device to an LMF network element by using a "location information transmission procedure." Correspondingly, the LMF network element receives the phase information of each reference device, and sends the phase information of each device to the first device. Alternatively, a reference device other than the target reference device in the plurality of reference devices sends phase information of the reference device to the positioning terminal device through an SL connection.

Optionally, in this embodiment of this application, the RSTD obtained by the reference device by measuring the reference signal may include an RSTD obtained by the reference device by measuring the reference signal of the first positioning assisting node and an RSTD obtained by the reference device by measuring the reference signal of the second positioning assisting node. The RSTD may be classified into a DL-RSTD and an SL-RSTD based on different types of positioning assisting nodes. For example, when the first positioning assisting node is the first network device, and the second positioning assisting node is the second network device, the RSTD obtained by the reference device by measuring the reference signal is a DL-RSTD. For another example, when the first positioning assisting node is the first assisting terminal device, and the second positioning assisting node is the second assisting terminal device, the RSTD obtained by the reference device by measuring the reference signal is an SL-RSTD.

For example, an example in which the first positioning assisting node is the first network device and the second positioning assisting node is the second network device is used for description. The RSTD obtained by the reference device by measuring the reference signal may be a difference between a first time measurement value and a second time measurement value. The first time measurement value is a time measurement value obtained by the reference device by measuring a reference signal of the first network device based on the first reference signal resource/the second reference signal resource, and the second time measurement value is a time measurement value obtained by the reference device by measuring a reference signal of the second network device based on the third reference signal resource/the fourth reference signal resource. For the RSTD and the time measurement value, refer to related descriptions in the preamble part of the specific implementation. Details are not described herein again.

For example, in this embodiment of this application, the first information may include:

a TRP ID of the first network device and a TRP ID of the second network device;
a PCI corresponding to a cell in which the first network device sends a reference signal and a PCI corresponding to a cell in which the second network device sends a reference signal;
identification information of the first reference signal resource and identification information of the third reference signal resource;
measurement time information for measuring the reference signal by the reference device;
location information of the first network device, location information of the second network device, and location information of the reference device;
a difference between the first phase value and the fourth phase value; and
a difference between the first time measurement value and the second time measurement value.

Optionally, in this embodiment of this application, the RSTD obtained by the reference device by measuring the reference signal may be used to determine a search range for double-difference carrier phase positioning. The positioning terminal device may perform location resolving of double-difference carrier phase positioning in a search range corresponding to the RSTD of the reference device, so that efficiency of location resolving and positioning precision of the positioning terminal device are improved. The following uses an example in which two positioning assisting nodes are respectively the first network device and the second network device to describe, with reference to a double-difference carrier phase positioning algorithm 1, a specific implementation in which the positioning terminal device performs double-difference carrier phase positioning based on the RSTD and the phase information.

Double-difference carrier phase positioning algorithm 1:

For example, the positioning terminal device may obtain an RSTD of the reference device, an RSTD of the target terminal device, a PDOA of the reference device, and a PDOA of the target terminal device.

RSTD of the reference device: The RSTD of the reference device is $\tau_p^{(ij)}$, $\tau_p^{(ij)} = \tau_p^{(i)} - \tau_p^{(j)}$, where $\tau_p^{(i)}$ is a time measurement value of the reference device relative to the first network device $i$, for example, the first time measurement value; and $\tau_p^{(j)}$ is a time measurement value of the reference device relative to the second network device $j$, for example, the second time measurement value.

RSTD of the target terminal device: The RSTD of the target terminal device is $\tau_t^{(ij)}$, $\tau_t^{(ij)} = \tau_t^{(i)} - \tau_t^{(j)}$, where $\tau_t^{(i)}$ is a time measurement value of the target terminal device relative to the first network device $i$, for example, a time measurement value obtained by the target terminal device by measuring a reference signal of the first network device $i$ based on the first reference signal resource, and $\tau_t^{(j)}$ is a time measurement value of the target terminal device relative to the second network device $j$, for example, a time measurement value obtained by the target terminal device by measuring a reference signal of the second network device $j$ based on the third reference signal resource.

PDOA of the reference device: Refer to formula (4). The PDOA of the reference device is $\varphi_p^{(ij)}$, $\varphi_p^{(ij)} = \varphi_p^{(i)} - \varphi_p^{(j)}$, where $\varphi_p^{(i)}$ is a phase measurement value of the reference device relative to the first network device $i$, and $\varphi_p^{(j)}$ is a phase measurement value of the reference device relative to the second network device $j$.

PDOA of the target terminal device: Refer to formula (3). The PDOA of the target terminal device is $\varphi_t^{(ij)}$, $\varphi_t^{(ij)} = \varphi_t^{(i)} - \varphi_t^{(j)}$, where $\varphi_t^{(i)}$ is a phase measurement value of the target terminal device relative to the first network device $i$, and $\varphi_t^{(j)}$ is a phase measurement value of the target terminal device relative to the second network device $j$.

Double-difference TDOA: The double-difference TDOA is a difference between the RSTD of the reference device and the RSTD of the target terminal device, and the double-difference TDOA may be determined by using formula (6). Formula (6) is as follows:

$$\tau_{tp}^{(ij)} = \left( \tau_t^{(ij)} - \tau_p^{(ij)} \right) \qquad \text{formula (6)}$$

In formula (6), $\tau_{tp}^{(ij)}$ is a double-difference TDOA.

Double-difference PDOA: The double-difference PDOA is a difference between the PDOA of the reference device and the PDOA of the target terminal device, and the double-difference TDOA may be determined by using formula (5).

The positioning terminal device may obtain a coarse location of the target terminal device through calculation based on a location of the reference device, a location of the first network device, and a location of the second network device with reference to formula (6). In addition, location coordinates x that satisfy a constraint of the double-difference TDOA and the double-difference PDOA are searched for within a specific distance range of the coarse location of the target terminal device by using an optimization algorithm. A location estimation result of the double-difference TDOA may be determined by using formula (7). Formula (7) is as follows:

$$x_{TDOA} = arg\min_x \sum_n \frac{(d_n(x) - \hat{d}_n)^2}{\sigma_n^2} \qquad \text{formula (7)}$$

In formula (7), $x_{TDOA}$ is a coarse location that is of the target terminal device and that is found by using the double-

difference TDOA, $d_n(x)$ is a search value of $\tau_{tp}^{(ij)}$, $\hat{d}_n$ is a measurement value of $\tau_{tp}^{(ij)}$, and $\sigma_n^2$ is a variance of $\tau_{tp}^{(ij)}$.

With reference to formula (7), the location coordinates x constrained by the double-difference TDOA and the double-difference PDOA may be determined by using formula (8). Formula (8) is as follows:

$$x = arg \min_{x \in (x_{TDOA} \pm D)} \sum_n \frac{(d_n(x) - \hat{d}_n)^2}{\sigma_n^2} + \sum_n \frac{(p_n(x) - \hat{p}_n)^2}{\sigma_{pn}^2} \qquad \text{formula (8)}$$

In formula (8), $p_n(x)$ is a search value of $\varphi_{tp}^{(ij)}$, $\hat{p}_n$ is a measurement value of $\varphi_{tp}^{(ij)}$, $\sigma_{pn}^2$ is a variance of $\varphi_{tp}^{(ij)}$, D is a distance range of a coarse location of the target terminal device, and n is a number of the network device.

In other words, a location range of the target terminal device may be determined by using the RSTD of the reference device and the RSTD of the target terminal device, and then the positioning terminal device determines, within the range, a location estimation result corresponding to the double-difference carrier phase positioning, so that efficiency of location resolving and positioning precision of the positioning terminal device are improved.

Optionally, in this embodiment of this application, the AOD information between the reference device and the positioning assisting node for sending the reference signal may include one or more of the following:

an AOD of each of a plurality of paths between the reference device and the first positioning assisting node, an AOD of a first path between the reference device and the first positioning assisting node, an AOD of a reflection path between the reference device and the first positioning assisting node, an AOD of each of a plurality of paths between the reference device and the second positioning assisting node, an AOD of a first path between the reference device and the second positioning assisting node, an AOD of a reflection path between the reference device and the second positioning assisting node, an AOD between a communication device closest to the reference device and the reference device, an RSRP of the reference signal of the first positioning assisting node, an RSRPP of each of a plurality of paths of the reference signal of the first positioning assisting node, an RSRP of the reference signal of the second positioning assisting node, or an RSRPP of each of a plurality of paths of the reference signal of the second positioning assisting node. The AOD may be classified into a DL-AOD and an SL-AOD based on different types of positioning assisting nodes. For example, when the first positioning assisting node is the first network device, and the second positioning assisting node is the second network device, the AOD is a DL-AOD. For another example, when the first positioning assisting node is the first assisting terminal device, and the second positioning assisting node is the second assisting terminal device, the AOD is an SL-AOD. For the DL-AOD and the SL-AOD, refer to related descriptions in the preamble of the specific implementation. Details are not described herein again.

Optionally, in this embodiment of this application, the AOD may include a horizontal azimuth (azimuth AoD) and/or a vertical zenith (zenith AoD). The horizontal azimuth may be used to determine a plane location (for example, a longitude and a latitude) of the target terminal device. The vertical zenith may be used to determine a height of the target terminal device.

Optionally, the communication device closest to the reference device may include but is not limited to a reflector, a scatterer, an intelligent reflective surface, an intelligent relay station, or the like.

Optionally, in this embodiment of this application, the AOD information between the reference device and the positioning assisting node for sending the reference signal may be used to implement carrier phase positioning when the positioning terminal device does not obtain location information of the positioning assisting node. The following uses an example in which two positioning assisting nodes are respectively the first network device and the second network device to describe, with reference to a double-difference carrier phase positioning algorithm 2, a specific implementation in which the positioning terminal device performs double-difference carrier phase positioning based on the AOD information and the phase information.

Double-difference carrier phase positioning algorithm 2:

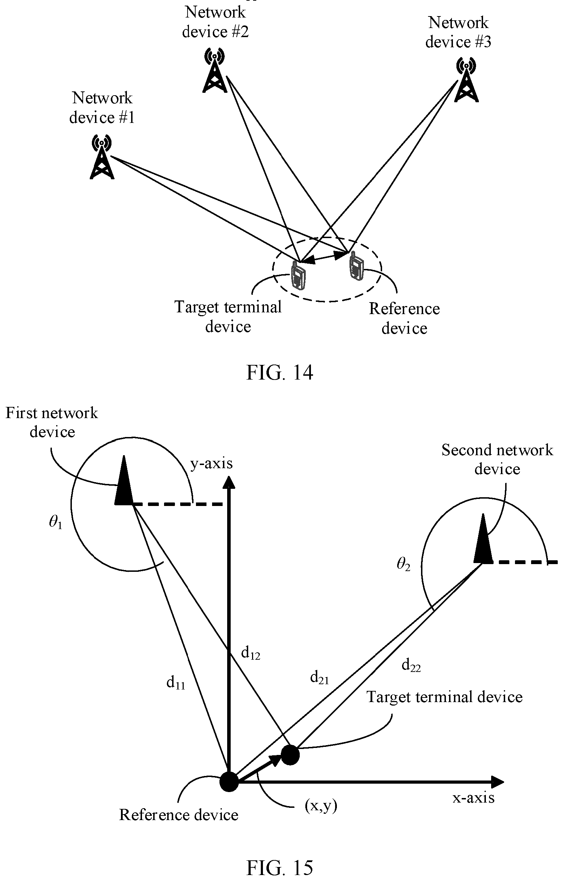

For example, FIG. 14 is a diagram of an application scenario of the double-difference carrier phase positioning algorithm 2 according to an embodiment of this application. As shown in FIG. 14, the reference device is close to the target terminal device, and the target terminal device is far away from each of the network device #1 to the network device #3. In this way, a DL-AOD, observed from the network device, of the target terminal device is approximately the same as a DL-AOD, observed from the network device, of the reference device. In this case, it may be considered that the DL-AOD of the target terminal device and the DL-AOD of the reference device are the same.

Optionally, in this embodiment of this application, the positioning terminal device may obtain the PDOA of the reference device, the PDOA of the target terminal device, DL-AOD information between the reference device and the network device for sending the reference signal, and/or DL-AOD information between the target terminal device and the network device for sending the reference signal.

For example, the positioning terminal device may obtain the PDOA of the reference device, the PDOA of the target terminal device, a DL-AOD between the reference device and the first network device, and a DL-AOD between the reference device and the second network device. For the PDOA of the reference device, the PDOA of the target terminal device, and the double-difference PDOA, refer to related descriptions in the double-difference carrier phase positioning algorithm 1. Details are not described herein again.

For example, as shown in FIG. 15, the DL-AOD between the reference device and the first network device may be $\theta_1$, and the DL-AOD between the reference device and the second network device may be $\theta_2$. A to-be-solved quantity is a vector $(x,y)$ that the reference device points to the target terminal device. Unknown quantities are as follows:

$d_{11}$: a distance from the reference device to the first network device.
$d_{12}$: a distance from the target terminal device to the first network device.
$d_{21}$: a distance from the reference device to the second network device.
$d_{22}$: a distance from the target terminal device to the second network device.

It is considered that a unit vector $\vec{e}(\theta)$ corresponding to a direction $\theta$ may be represented by formula (9). Formula (9) is as follows:

$$\vec{e}(\theta) = \begin{bmatrix} \cos\theta \\ \sin\theta \end{bmatrix} \qquad\qquad \text{formula (9)}$$

With reference to formula (9) and the foregoing unknown quantities, an equation set constructed by using formula (10) to formula (14) may be obtained.

$$x = (d_{12} - d_{11})\cos\theta_1 = (d_{22} - d_{21})\cos\theta_2 \qquad\qquad \text{formula (10)}$$

$$y = (d_{12} - d_{11})\sin\theta_1 = (d_{22} - d_{21})\sin\theta_2 \qquad\qquad \text{formula (11)}$$

$$d_{12} - d_{11} = x\cos\theta_1 + y\sin\theta_1 \qquad\qquad \text{formula (12)}$$

$$d_{22} - d_{21} = x\cos\theta_2 + y\sin\theta_2 \qquad\qquad \text{formula (13)}$$

$$dd^{21} = (d_{22} - d_{21}) - (d_{12} - d_{11}) = <(x,y), \vec{e}(\theta_2) - \vec{e}(\theta_1)> \qquad\qquad \text{formula (14)}$$

In formula (10) to formula (13), with reference to related descriptions of formula (5), $d_{12} - d_{11}$ represents a first distance difference, namely, a difference between the distance from the first network device to the target terminal device and the distance from the first network device to the reference device. $d_{22} - d_{21}$ represents a second distance difference, namely, a difference between the distance from the second network device to the target terminal device and the distance from the second network device to the reference device. $dd^{21}$ may represent a difference between the first distance difference and the second distance difference. It may be understood that formula (14) may be used to represent a double-difference observation equation between the first network device and the second network device.

It may be understood that, with reference to related descriptions of formula (5), $dd^{21}$ may be represented by using a double-difference PDOA measurement value $\varphi_{tp}^{(ij)}$ in formula (5).

According to the foregoing related descriptions of a number of first network devices and a number of second network devices, in this embodiment of this application, there may be a plurality of first network devices, and there may be a plurality of second network devices. To resolve a vector $(x, y)$, a third network device may be introduced. It is assumed that a type of the third network device is the second network device, a double-difference observation equation between the third network device and the first network device may be obtained with reference to formula (9) to formula (14).

For example, the double-difference observation equation between the third network device and the first network device may be represented by using formula (15).

$$dd^{31} = (d_{32} - d_{31}) - (d_{12} - d_{11}) = <(x,y), \vec{e}(\theta_3) - \vec{e}(\theta_1)> \qquad\qquad \text{formula (15)}$$

In formula (15), $d_{32}$ represents a distance from the target terminal device to the third network device, $d_{31}$ represents a distance from the reference device to the third network device, and $\theta_3$ represents a DL-AOD between the reference device and the third network device. $dd^{31}$ may represent a difference between the first distance difference and a third distance difference. The third distance difference is a difference between the distance from the third network device to the target terminal device and the distance from the third network device to the reference device.

It may be understood that formula (16) and formula (17) may be obtained by combining formula (14) and formula (15). Formula (17) is a matrix expression of the to-be-solved quantity *(x, y)* about $dd^{21}$ and $dd^{31}$.

$$[\vec{e}(\theta_2) - \vec{e}(\theta_1), \vec{e}(\theta_3) - \vec{e}(\theta_1)]^T \begin{bmatrix} x \\ y \end{bmatrix} = \begin{bmatrix} dd^{21} \\ dd^{31} \end{bmatrix} \qquad \text{formula (16)}$$

It may be understood that formula (17) may be obtained by using formula (16), and formula (17) is a solving formula of the to-be-solved quantity *(x, y)*.

$$\begin{bmatrix} x \\ y \end{bmatrix} = ([\vec{e}(\theta_2) - \vec{e}(\theta_1), \vec{e}(\theta_3) - \vec{e}(\theta_1)]^T)^{-1} \begin{bmatrix} dd^{21} \\ dd^{31} \end{bmatrix} \qquad \text{formula (17)}$$

Further, after *(x, y)* is obtained, location information of the target terminal device may be obtained based on the location of the reference device.

In other words, in this embodiment of this application, by using the AOD of the reference device, the PDOA of the reference device, and the location information of the reference device that are carried in the first information, the positioning terminal device can also implement high-precision carrier phase positioning without using the location information of the network device.

Optionally, in this embodiment of this application, the first information may further include measurement result information of the target terminal device. The measurement result information of the target terminal device may include one or more of the following: phase information obtained by the target terminal device by measuring the reference signal, RSTD obtained by the target terminal device by measuring the reference signal, AOD information between the target terminal device and the positioning assisting node for sending the reference signal, identification information of the positioning assisting node for sending the reference signal, measurement time information for measuring the reference signal by the target terminal device, identification information of the reference signal or configuration information of the reference signal. In other words, when the positioning terminal device is not the target terminal device, the positioning terminal device may obtain the measurement result information of the target terminal device by using the first information, so that the positioning terminal device can perform location estimation on the target terminal device through double-difference carrier phase positioning.

Optionally, in this embodiment of this application, the phase information may be in a form of double-difference PDOA. The double-difference PDOA may be a difference between the PDOA of the reference device and the PDOA of the target terminal device.

It should be understood that there may be one or more first positioning assisting nodes, and there may be one or more second positioning assisting nodes. This is not specifically limited in embodiments of this application.

Optionally, in this embodiment of this application, the first device may obtain the first information by using the "location information transmission procedure". For example, the first device is the location management network element, and the first information includes the phase information obtained by the reference device by measuring the reference signal. That a first device obtains first information (step S1301) may include the following steps.

S1301a: The first device sends a request location information message to the reference device. Correspondingly, the reference device receives the request location information message from the first device. The request location information message includes information for requesting the reference device to send, to the first device, the phase information obtained by the reference device by measuring the reference signal.

Optionally, in this embodiment of this application, the request location information message includes a first measurement request. The first measurement request is used to request the reference device to send, to the first device, the phase information and the RSTD that are obtained by the reference device by measuring the reference signal.

Alternatively, optionally, in this embodiment of this application, the request location information message includes a second measurement request. The second measurement request is used to request the reference device to send, to the first device, an RSRP and/or an RSRPP on at least one path, and the phase information obtained by the reference device by measuring the reference signal.

For example, the request location information message may be an LPP message.

S1301b: The reference device sends a provide location information message to the first device. Correspondingly, the first device receives the provide location information message from the reference device. The provide location information message may include the phase information obtained by the reference device by measuring the reference signal.

Alternatively, optionally, when the request location information message includes the first measurement request, the provide location information message may include the phase information and the RSTD that are obtained by the reference device by measuring the reference signal.

Alternatively, optionally, when the request location information message includes the second measurement request, the provide location information message may include the phase information obtained by the reference device by measuring the reference signal, and the RSRP and/or the RSRPP of the at least one path.

For example, the provide location information message may be an LPP message.

Optionally, when the first device is a reference device, that a first device obtains first information may include: The location management network element sends the request location information message to the first device. Correspondingly, the first device receives the request location information message from the location management network element, measures the reference signal based on the request location information message to obtain the first information, and sends the first information to the location management network element. The request location information message is used to request the first device to send, to the location management network element, the phase information obtained by the first device by measuring the reference signal; or the request location information message is used to request the first device to send, to the location management network element, the phase information and the RSTD that are obtained by the first device by measuring the reference signal; or the request location information message is used to request the first device to send, to the location management network element, the phase information obtained by the first device by measuring the reference signal and the AOD information between the reference device and the positioning assisting node for sending the reference signal. Because the AOD information between the reference device and the positioning assisting node for sending the reference signal is described in detail above, details are not described herein again.

Alternatively, optionally, in this embodiment of this application, that a first device obtains first information further includes: The first device sends a third measurement request to the target terminal device. The third measurement request is used to request the target terminal device to send, to the first device, the measurement result information obtained by the target terminal device by measuring the reference signal. Correspondingly, correspondingly, the target terminal device receives the third measurement request from the first device, and sends, to the first device, the measurement result information obtained by the target terminal device by measuring the reference signal. The measurement result information obtained by the target terminal device by measuring the reference signal includes phase information obtained by the target terminal device by measuring the reference signal, or the phase information and the RSTD that are obtained by the target terminal device by measuring the reference signal; or the phase information obtained by the target terminal device by measuring the reference signal, and the RSRP, and/or the RSRPP of the at least one path.

Optionally, when the first device is a reference device, that a first device obtains first information may include: The first device sends a PC5 message to the target terminal device. Correspondingly, the target terminal device receives the PC5 message from the location management network element, measures the reference signal based on the PC5 message to obtain first information, and sends the first information to the location management network element. The PC5 message is used to request the target terminal device to send, to the first device, the phase information obtained by the target terminal device by measuring the reference signal, or the phase information and the RSTD that are obtained by the target terminal device by measuring the reference signal and/or the AOD information.

For step S1302,

optionally, in this embodiment of this application, the first information may be assistance data or information in a location request message. The first information may be carried in the LPP message (for example, an LPP provide assistance data message) in the foregoing "assistance data transmission procedure"; or the first information may be carried in the LPP message (for example, an LPP request location information message) in the foregoing "location information transmission procedure"; or the first information may be carried in the PC5 message (for example, a MeasurementReportSidelink message).

For example, when the first device is a location management network element, the first device may send the first information to the positioning terminal device by using the LPP provide assistance data message or the LPP provide location information message. When the first device is a reference device, the first device may send the first information to the positioning terminal device by using the PC5 message.

Optionally, in this embodiment of this application, the positioning terminal device may pre-store the location information of the reference device. The positioning terminal device may receive the location information of the reference device by using higher layer signaling. Alternatively, when the type of the reference device is a network device, the first device may send the location information of the reference device to the positioning terminal device by using the "assistance data transmission procedure".

In other words, when the first device is a location management network element, the first device may send the phase information in the first information and the location information of the reference device to the positioning terminal device by using the "assistance data transmission procedure", so that the positioning terminal device may obtain the PDOA and the location information that are of the reference device, to perform double-difference carrier phase positioning. Alternatively, the first device may send the location information of the reference device to the positioning terminal device by using the "assistance data transmission procedure", and send the phase information in the first information to the positioning terminal device by using the location request message in the "location information transmission procedure". In this way, the positioning terminal device may obtain the phase information in the first information and the location information of the reference device, to support the positioning terminal device in performing double-difference carrier phase positioning.

Optionally, in this embodiment of this application, the first device is a reference device, and the first device may send a location request to the positioning terminal device. The location request may include the first information. In other words, the first device may serve as a location service requester to initiate a location service request for the target terminal device to the positioning terminal device, and may further send the first information to the positioning terminal device.

Optionally, in this embodiment of this application, the first device is a reference device, and before step S1302, the method further includes the following steps.

S1303. The first device obtains second indication information. The second indication information indicates the first device to send the first information to the positioning terminal device.

Optionally, in this embodiment of this application, that the first device obtains second indication information (step S1303) may include: The location management network element sends the second indication information to the first device. Correspondingly, the first device may receive the second indication information from the location management network element.

Alternatively, optionally, step S1303 may include: A terminal device connected to the first device through an SL sends second indication information to the first device. Correspondingly, the first device receives the second indication information from the terminal device connected to the first device through the SL.

Alternatively, optionally, step S1303 may include: The positioning assisting node sends second indication information to the first device. Correspondingly, the first device receives the second indication information from the positioning assisting node.

In other words, the location management network element, the positioning terminal device, or a terminal device other than the positioning terminal device (for example, the terminal device connected to the first device through the SL) may send the second indication information to the first device, to indicate the first device to send the first information to the positioning terminal device.

For example, the location management network element sends the second indication information to the first device. The second indication information may be carried in an LPP message. For example, the terminal device connected to the first device through the SL sends the second indication information to the first device. The second indication information may be carried in a PC5 message. For example, the network device sends the second indication information to the first device. The second indication information may be carried in RRC signaling or MAC layer signaling.

Optionally, as shown in FIG. 13, the method provided in this embodiment of this application further includes the following steps.

S1304: The positioning terminal device obtains measurement result information of the target terminal device. Because the measurement result information of the target terminal device is described in detail in step S1301, details are not described herein again.

Optionally, in this embodiment of this application, the positioning terminal device may pre-store the measurement result information of the target terminal device. The pre-stored measurement result information of the target terminal device may be measurement result information obtained when measurement is performed previously.

Alternatively, optionally, in this embodiment of this application, when the positioning terminal device is not the target terminal device, the positioning terminal device may obtain the measurement result information of the target terminal device by using the "assistance data transmission procedure." For example, the positioning terminal device may receive a provide assistance data message from the location management network element. The provide assistance data message includes the measurement result information of the target terminal device.

Alternatively, optionally, in this embodiment of this application, when the positioning terminal device is not the target terminal device, and the positioning terminal device is connected to the target terminal device through an SL, the positioning terminal device may receive the PC5 message from the target terminal device. The PC5 message may include the measurement result information of the target terminal device.

Alternatively, optionally, in this embodiment of this application, the first information may further include the measurement result information of the target terminal device. In other words, the positioning terminal device may obtain the measurement result information of the target terminal device by receiving the first information from the first device.

S1305: The positioning terminal device determines location information of the target terminal device based on the first information and the measurement result information of the target terminal device. The location information of the target terminal device includes a location estimation result obtained by the positioning terminal device by performing double-difference carrier phase positioning on the target terminal device.

It should be understood that step S1304 may be performed before step S1301, or step S1304 and step S1301 may be performed simultaneously, or step S1304 may be performed after step S1301. This is not specifically limited in embodiments of this application.

In this embodiment of this application, the first information may include the phase information obtained by the reference device by measuring the reference signal. Therefore, after receiving the first information, the positioning terminal device may support, in a UE-based positioning mode, the positioning terminal device in performing double-difference carrier phase positioning by using the phase information in the first information, so that a carrier phase measurement error caused by non-ideal factors such as a synchronization error, a random initial phase error, a clock shift frequency offset, and an engineering parameter error of a positioning assisting node (for example, a network device or an assisting terminal device) is eliminated through double-difference carrier phase positioning. In this way, positioning accuracy is improved. Therefore, based on the information sending and receiving method provided in this embodiment of this application, a UE-based carrier phase positioning method can be optimized, so that the positioning terminal device supports high-precision carrier phase positioning.

The actions of the first device in steps S1301 to S1305 may be performed by the processor 1201 in the communication apparatus 120 shown in FIG. 12 by invoking application program code stored in the memory 1202, to instruct the communication apparatus to perform the actions, the actions of the positioning terminal device in steps S1301 to S1305 may be performed by the processor 1201 in the communication apparatus 120 shown in FIG. 12 by invoking the application program code stored in the memory 1202, to instruct the communication apparatus to perform the actions. This is not limited in embodiments.

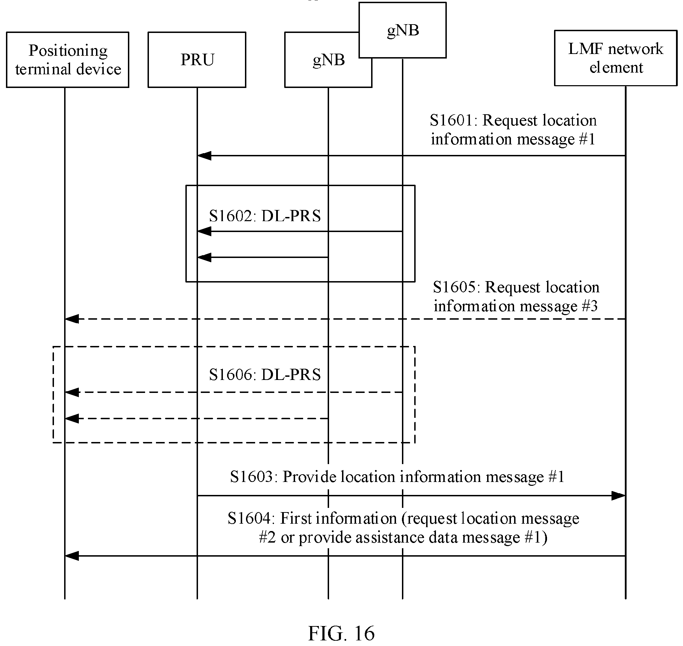

The following uses an example in which the first device is an LMF network element, the target terminal device is a positioning terminal device, the reference device is a PRU, the positioning assisting node is a gNB, and the reference signal is a DL-PRS to describe the information sending and receiving method provided in this embodiment of this application with reference to FIG. 16.

FIG. 16 is an example of an information sending and receiving method according to an embodiment of this application. The method may include the following steps.

S1601: An LMF network element sends a request location information message #1 to a PRU. Correspondingly, the PRU receives the request location information message #1 from the LMF network element. The request location information message #1 may be used to request the PRU to send, to the LMF network element, phase information obtained by the PRU by measuring a DL-PRS. Alternatively, the request location information message #1 may be used to request the PRU to send, to the LMF network element, phase information and an RSTD that are obtained by the PRU by measuring a DL-PRS.

Optionally, in this embodiment of this application, the LMF network element may pre-store positioning capability information of the PRU.

Alternatively, optionally, in this embodiment of this application, before step S1601, the LMF network element may further obtain the positioning capability information of the PRU by using a "positioning capability reporting procedure of a terminal device", for example, steps S1601a and S1601b.

S1601a: The LMF network element sends an LPP request capability (LPP request capability) message to the PRU. Correspondingly, the PRU receives the LPP capability request message from the LMF network element. The LPP request capability message is used to request the PRU to send a positioning capability of the PRU to the LMF network element. The positioning capability of the PRU includes a positioning method supported by the PRU.

S1601b: The PRU sends an LPP provide capability (LPP provide capability) message to the LMF network element. Correspondingly, the LMF network element receives the LPP provide capability message from the PRU. The LPP provide capability message includes the positioning capability information of the PRU. In other words, the LMF may obtain the positioning capability information of the PRU by using steps S1601a and S1601b, and then the LMF network element performs step S1601 when the LMF network element determines that the PRU has a capability of measuring a DL-PRS to obtain phase information and an RSTD.

S1602: Each of a plurality of gNBs sends a DL-PRS to the PRU. Correspondingly, the PRU receives the DL-PRS from each of the plurality of gNBs, and measures the DL-PRS from each gNB to obtain phase information and an RSTD.

S1603: The PRU sends a provide location information message #1 to the LMF network element. Correspondingly, the LMF network element receives the provide location information message #1 from the PRU. The provide location information message #1 includes phase information and an RSTD that are obtained by the PRU by measuring a DL-PRS.

S1604: The LMF network element sends first information to a positioning terminal device. Correspondingly, the positioning terminal device receives the first information from the LMF network element. The first information includes the phase information and the RSTD that are obtained by the PRU by measuring the DL-PRS.

Optionally, in this embodiment of this application, the first information may further include location information of the PRU.

Optionally, in this embodiment of this application, the first information may further include measurement time information for measuring the DL-PRS by the PRU. As described in the foregoing related description of "measurement time information for measuring a reference signal by a reference device" in step S1301, the measurement time information for measuring the DL-PRS by the PRU may include a moment and a time period for receiving the DL-PRS by the PRU. The time period in which the PRU receives the DL-PRS may indicate validity time of phase information and/or an RSTD that are/is obtained by the PRU by measuring the DL-PRS.

Optionally, in this embodiment of this application, the first information may be carried in a provide assistance data message #1. The first information may further include location information of each of the plurality of gNBs.

Alternatively, optionally, the first information may be carried in a request location information message #2. The request location information message #2 may be used to request the positioning terminal device to perform location estimation. The positioning terminal may perform location estimation by using a double-difference carrier phase positioning algorithm 1.

It may be understood that, in this embodiment of this application, the first information may not include the location information of each of the plurality of gNBs, and the positioning terminal device may obtain the location information of each of the plurality of gNBs by using an assistance data transmission procedure.

Optionally, in this embodiment of this application, the positioning terminal device may measure the DL-PRS before step S1604 to obtain the phase information and the RSTD, for example, steps S1605 and S1606.

S1605: The LMF network element sends a request location information message #3 to the positioning terminal device. Correspondingly, the positioning terminal device receives the request location information message #3 from the LMF network element. The request location information message #3 is used to request the positioning terminal device to measure the DL-PRS to obtain measurement result information. The measurement result information may include phase information and an RSTD that are obtained by the positioning terminal device by measuring the DL-PRS.

S1606: Each of the plurality of gNBs sends a DL-PRS to the positioning terminal device. Correspondingly, the positioning terminal device receives the DL-PRS from each of the plurality of gNBs, and measures the DL-PRS from each gNB to obtain measurement result information.

Optionally, step S1606 and step S1602 may be performed simultaneously. In other words, the positioning terminal device and the PRU may measure the DL-PRS at a same moment. It may be understood that the positioning terminal device and the PRU measure the DL-PRS at a same moment, so that a synchronization error, a random initial phase error, a clock shift frequency offset, and an engineering parameter error between the plurality of gNBs can be reduced through double-difference carrier phase positioning. In this way, positioning accuracy of carrier phase positioning is improved.

Alternatively, optionally, in this embodiment of this application, the request location message #2 may be used to request the positioning terminal device to measure the DL-PRS to obtain measurement result information and perform location estimation. The measurement result information includes phase information and an RSTD that are obtained by the positioning terminal device by measuring the DL-PRS. In other words, after receiving the first information from the LMF network element, the positioning terminal device may measure the DL-PRS to obtain the measurement result information and perform location estimation.

In this embodiment of this application, the first information may include the phase information obtained by the reference device by measuring the reference signal. Therefore, after receiving the first information, the positioning terminal device may support, in a UE-based positioning mode, the positioning terminal device in performing double-difference carrier phase positioning by using the phase information in the first information, so that a carrier phase measurement error caused by non-ideal factors such as a synchronization error, a random initial phase error, a clock shift frequency offset, and an engineering parameter error of a positioning assisting node (for example, a network device or an assisting terminal device) is eliminated through double-difference carrier phase positioning. In this way, positioning accuracy is improved. Further, because the first information further includes an RSTD of the reference device, a location range of the positioning terminal device may be determined, so that the positioning terminal device determines, within the range, a location estimation result corresponding to the double-difference carrier phase positioning. In this way, efficiency of location resolving and positioning precision of the positioning terminal device are improved. Therefore, based on the information sending and receiving method provided in this embodiment of this application, a UE-based carrier phase positioning method can be optimized, so that the positioning terminal device supports high-precision carrier phase positioning.

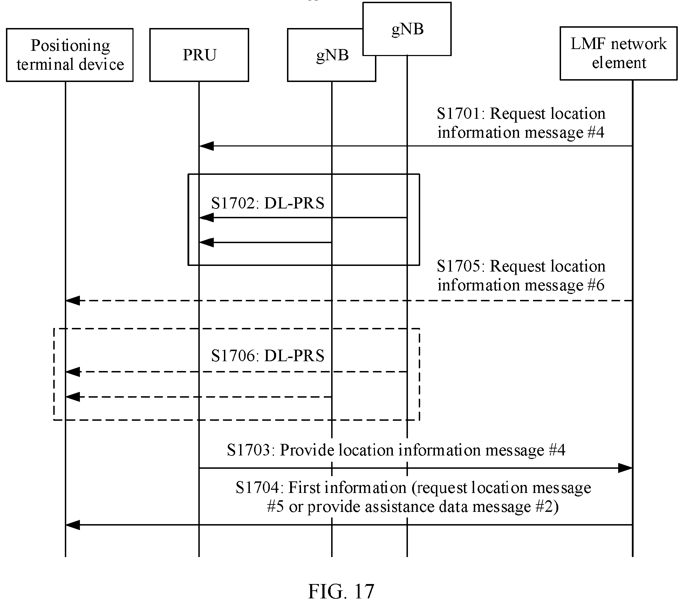

The following uses the application scenario shown in FIG. 14 as an example, and uses an example in which the first device is an LMF network element, the target terminal device is a positioning terminal device, the reference device is a PRU, the positioning assisting node is a gNB, and the reference signal is a DL-PRS to describe the information sending and receiving method provided in this embodiment of this application with reference to FIG. 17.

FIG. 17 is another example of an information sending and receiving method according to an embodiment of this application. The method may include the following steps.

S1701: An LMF network element sends a request location information message #4 to a PRU. Correspondingly, the PRU receives the request location information message #4 from the LMF network element. The request location information message #4 may be used to request the PRU to send, to the LMF network element, phase information obtained by the PRU by measuring a DL-PRS, an RSRP, and/or an RSRPP of at least one path.

Optionally, in this embodiment of this application, the LMF network element may pre-store positioning capability information of the PRU. Alternatively, the LMF network element may obtain positioning capability information of the PRU by using a "positioning capability reporting procedure of a terminal device." For the "positioning capability reporting procedure of a terminal device", refer to the foregoing steps S1601a and S1601b. Details are not described herein again.

S1702: Each of a plurality of gNBs sends a DL-PRS to the PRU. Correspondingly, the PRU receives the DL-PRS from each of the plurality of gNBs, and measures the DL-PRS from each gNB to obtain phase information, an RSRP, and/or an RSRPP of at least one path.

S1703: The PRU sends the provide location information message #4 to the LMF network element. Correspondingly, the LMF network element receives the provide location information message #4 from the PRU. The provide location information message #4 includes the phase information obtained by the PRU by measuring the DL-PRS, the RSRP, and/or the RSRPP of the at least one path.

S1704: The LMF network element sends first information to a positioning terminal device. Correspondingly, the positioning terminal device receives the first information from the LMF network element. The first information includes the phase information obtained by the PRU by measuring the DL-PRS, and a DL-AOD that is between the PRU and each gNB and that is determined based on the RSRP and/or the RSRPP of the at least one path.

Optionally, in this embodiment of this application, the first information may further include location information of the PRU.

Optionally, in this embodiment of this application, the first information may further include measurement time information for measuring the DL-PRS by the PRU.

Optionally, in this embodiment of this application, the first information may be carried in a provide assistance data message #2.

Alternatively, optionally, the first information may be carried in a request location information message #5. The request location information message #5 may be used to request the positioning terminal device to perform location estimation. The positioning terminal may perform location estimation by using a double-difference carrier phase positioning algorithm 2.

Optionally, in this embodiment of this application, the positioning terminal device may measure the DL-PRS before step S1704 to obtain the phase information, for example, steps S1705 and S1706.

S1705: The LMF network element sends a request location information message #6 to the positioning terminal device. Correspondingly, the positioning terminal device receives the request location information message #6 from the LMF network element. The request location information message #6 is used to request the positioning terminal device to measure the DL-PRS to obtain measurement result information. The measurement result information may include the phase information obtained by the positioning terminal device by measuring the DL-PRS. Alternatively, the measurement result information may include the phase information obtained by the positioning terminal device by measuring the DL-PRS, and RSRP and/or RSRPP of at least one path that are/is obtained by the positioning terminal device by measuring the DL-PRS.

It may be understood that, in the application scenario shown in FIG. 14, the PRU is close to the positioning terminal device, and the PRU and the positioning terminal device are far away from each of the plurality of gNBs. In this way, a DL-AOD, observed from the gNB, of the positioning terminal device is approximately the same as a DL-AOD, observed from the gNB, of the PRU. In this case, it may be considered that the DL-AODs of the positioning terminal device and the PRU are the same. In other words, the positioning terminal device may perform location estimation by using the DL-AOD between the PRU and each gNB.

S1706: Each of the plurality of gNBs sends a DL-PRS to the positioning terminal device. Correspondingly, the positioning terminal device receives the DL-PRS from each of the plurality of gNBs, and measures the DL-PRS from each gNB to obtain measurement result information.

Optionally, step S1706 and step S1702 may be performed simultaneously. In other words, the positioning terminal device and the PRU may measure the DL-PRS at a same moment. It may be understood that the positioning terminal device and the PRU measure the DL-PRS at a same moment, so that a synchronization error, a random initial phase error, a clock shift frequency offset, and an engineering parameter error between the plurality of gNBs can be reduced. In this way, positioning accuracy of carrier phase positioning is improved.

Alternatively, optionally, in this embodiment of this application, the request location message #5 may be used to request the positioning terminal device to measure the DL-PRS to obtain measurement result information and perform location estimation. The measurement result information includes the phase information obtained by the positioning terminal device by measuring the DL-PRS. In other words, after receiving the first information from the LMF network element, the positioning terminal device may measure the DL-PRS to obtain the measurement result information and perform location estimation.

In this embodiment of this application, the first information may include the phase information obtained by the reference device by measuring the reference signal. Therefore, after receiving the first information, the positioning terminal device may support, in a UE-based positioning mode, the positioning terminal device in performing double-difference carrier phase positioning by using the phase information in the first information, so that a carrier phase measurement error caused by non-ideal factors such as a synchronization error, a random initial phase error, a clock shift frequency offset, and an engineering parameter error of a positioning assisting node (for example, a network device or an assisting terminal device) is eliminated through double-difference carrier phase positioning. In this way, positioning accuracy is improved. Further, because the first information further includes an AOD between the reference device and each positioning assisting node, the positioning terminal device may perform location estimation by using the double-difference carrier phase positioning algorithm 2, so that location estimation can be further performed without using location information of each positioning assisting node. Therefore, based on the information sending and receiving method provided in this embodiment of this application, a UE-based carrier phase positioning method can be optimized, so that the positioning terminal device supports high-precision carrier phase positioning.

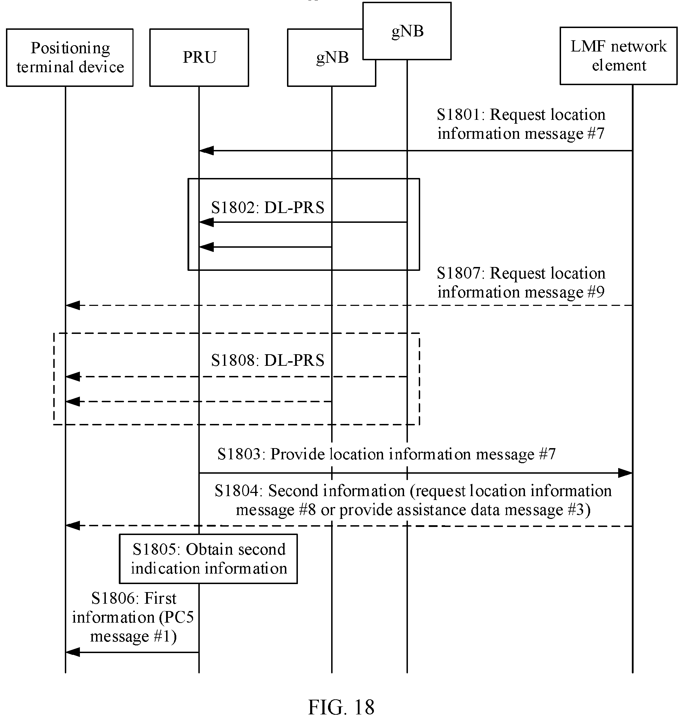

The following uses the application scenario shown in FIG. 14 as an example, and uses an example in which the first device is a PRU, the target terminal device is a positioning terminal device, the positioning assisting node is a gNB, and the reference signal is a DL-PRS to describe the information sending and receiving method provided in this embodiment of this application with reference to FIG. 18.

FIG. 18 is another example of an information sending and receiving method according to an embodiment of this application. The method may include the following steps.

S1801: An LMF network element sends a request location information message #7 to a PRU. Correspondingly, the PRU receives the request location information message #7 from the LMF network element. The request location information message #7 may be used to request the PRU to send, to the LMF network element, measurement result information obtained by the PRU by measuring a DL-PRS. The measurement result information may include phase information obtained by the PRU by measuring the DL-PRS, and DL-AOD information between the PRU and each of a plurality of gNBs.

Optionally, in this embodiment of this application, the DL-AOD information between the PRU and each of the plurality of gNBs may include one or more of the following: an RSRP obtained by the PRU by measuring the DL-PRS, an RSRPP that is of at least one path and that is obtained by the PRU by measuring the DL-PRS, or a DL-AOD that is between the PRU and each of the plurality of gNBs and that is determined by the PRU by measuring the DL-PRS. As described in the related description of the preamble "DL-AOD" of the specific implementation, when the PRU obtains reference signal received power information corresponding to a plurality of beams that correspond to each of the plurality of gNBs at different emergent angles, the PRU may also determine the DL-AOD between the PRU and each of the plurality of gNBs.

S1802: Each of a plurality of gNBs sends a DL-PRS to the PRU. Correspondingly, the PRU receives the DL-PRS from each of the plurality of gNBs, and measures the DL-PRS from each gNB to obtain measurement result information.

S1803: The PRU sends a provide location information message #7 to the LMF network element. Correspondingly, the LMF network element receives the provide location information message #7 from the PRU, and determines the DL-AOD between the PRU and each of the plurality of gNBs based on the measurement result information in the provide location information message #7. The measurement result information in the provide location information message #7 may include an RSRP obtained by the PRU by measuring the DL-PRS and/or an RSRPP of at least one path.

Optionally, the information sending and receiving method shown in FIG. 18 may further include step S1804.

S1804: The LMF network element sends second information to a positioning terminal device. Correspondingly, the positioning terminal device receives the second information from the LMF network element. The second information includes the DL-AOD between the PRU and each of the plurality of gNBs.

Optionally, the second information may be carried in a provide assistance data message #3, or the second information may be carried in a request location information message #8.

S1805: The PRU obtains second indication information. The second indication information indicates the PRU to send the first information to the positioning terminal device. The first information includes the measurement result information obtained by the PRU by measuring the DL-PRS.

Optionally, in this embodiment of this application, the second information may further include location information of the PRU, or the first information may further include location information of the PRU. This is not specifically limited in embodiments of this application.

Optionally, in this embodiment of this application, the first information may further include measurement time information for measuring the DL-PRS by the PRU.

Optionally, in this embodiment of this application, that the PRU obtains second indication information may include step S1805a, step S1805b, or step S1805c. Steps S1805a to S1805c are as follows.

S1805a: The LMF network element sends the second indication information to the PRU. Correspondingly, the PRU receives the second indication information from the LMF network element. The second indication information may be carried in an LPP message or an NRPPa message.

S1805b: The positioning terminal device sends the second indication information to the PRU. Correspondingly, the PRU receives the second indication information from the positioning terminal device. The second indication information may be carried in a PC5 message.

S1805c: One of the plurality of gNBs sends the second indication information to the PRU. Correspondingly, the PRU receives the second indication information from one of the plurality of gNBs. The second indication information may be carried in RRC signaling or MAC layer signaling.

S1806: The PRU sends the first information to the positioning terminal device. Correspondingly, the positioning terminal device receives the first information from the PRU. The first information may be carried in a PC5 message #1.

It should be understood that step S1806 may be performed before step S1804, or step S1806 and step S1804 may be performed simultaneously, or step S1806 may be performed after step S1804. This is not specifically limited in embodiments of this application.

Optionally, in this embodiment of this application, the positioning terminal device may measure the DL-PRS before step S1806 to obtain the phase information, for example, steps S1807 and S1808.

S1807: The LMF network element sends a request location information message #9 to the positioning terminal device. Correspondingly, the positioning terminal device receives the request location information message #9 from the LMF network element. The request location information message #9 is used to request the positioning terminal device to measure the DL-PRS to obtain measurement result information. The measurement result information may include the phase information obtained by the positioning terminal device by measuring the DL-PRS. Alternatively, the measurement result information may include the phase information obtained by the positioning terminal device by measuring the DL-PRS, and RSRP and/or RSRPP of at least one path that are/is obtained by the positioning terminal device by measuring the DL-PRS.

S1808: Each of the plurality of gNBs sends a DL-PRS to the positioning terminal device. Correspondingly, the positioning terminal device receives the DL-PRS from each of the plurality of gNBs, and measures the DL-PRS from each gNB to obtain measurement result information.

Optionally, step S1808 and step S1802 may be performed simultaneously. In other words, the positioning terminal device and the PRU may measure the DL-PRS at a same moment. It may be understood that the positioning terminal device and the PRU measure the DL-PRS at a same moment, so that a synchronization error, a random initial phase error, a clock shift frequency offset, and an engineering parameter error between the plurality of gNBs can be reduced. In this way, positioning accuracy of carrier phase positioning is improved.

In this embodiment of this application, the first information may include the phase information obtained by the reference device by measuring the reference signal. Therefore, after receiving the first information, the positioning terminal device may support, in a UE-based positioning mode, the positioning terminal device in performing double-difference carrier phase positioning by using the phase information in the first information, so that a carrier phase measurement error caused by non-ideal factors such as a synchronization error, a random initial phase error, a clock shift frequency offset, and an engineering parameter error of a positioning assisting node (for example, a network device or an assisting terminal device) is eliminated through double-difference carrier phase positioning. In this way, positioning accuracy is improved. Further, because the first information further includes an AOD between the reference device and each positioning assisting node, the positioning terminal device may perform location estimation by using the double-difference carrier phase positioning algorithm 2, and may further perform location estimation without location information of each positioning assisting node. In addition, the reference device may further send the first information to the positioning terminal device through an SL, and the LMF network element may not need to send the first information to the positioning terminal device by using an LPP message. Therefore, based on the information sending and receiving method provided in this embodiment of this application, a UE-based carrier phase positioning method can be optimized, so that the positioning terminal device supports high-precision carrier phase positioning.

It may be understood that in the foregoing embodiments, the methods and/or steps implemented by the first device may be alternatively implemented by a component (for example, a processor, a chip, a chip system, a circuit, a logical module, or software) that may be used in the first device. The methods and/or steps implemented by the positioning terminal device may alternatively be implemented by a component (for example, a processor, a chip, a chip system, a circuit, a logic module, or software) that may be used in the positioning terminal device.

The foregoing mainly describes the solution provided in this application. Correspondingly, this application further provides a communication apparatus. The communication apparatus is configured to implement the methods in the foregoing method embodiments. The communication apparatus may be the first device in the foregoing method embodiments, an apparatus including the first device, or a component that may be used in the first device, for example, a chip or a chip system. Alternatively, the communication apparatus may be the positioning terminal device in the foregoing method embodiments, an apparatus including the positioning terminal device, or a component that may be used in the positioning terminal device, for example, a chip or a chip system.

It may be understood that, to implement the foregoing functions, the communication apparatus includes a hardware structure and/or a software module for performing a corresponding function. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

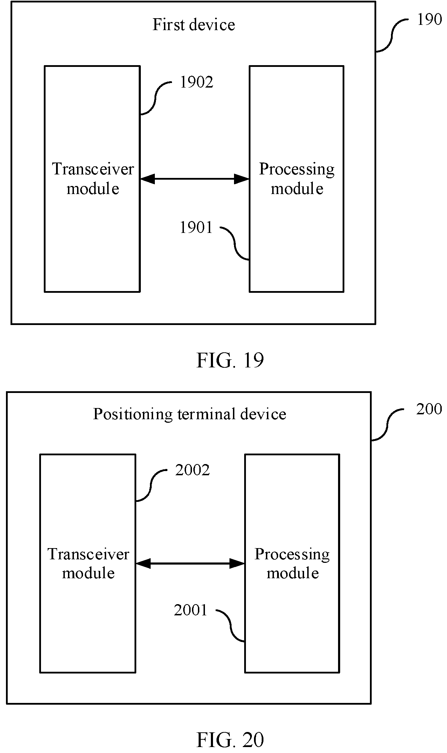

For example, the communication apparatus is the first device in the foregoing method embodiments. FIG. 19 is a diagram of a structure of a first device 190. The first device 190 includes a processing module 1901 and a transceiver module 1902.

In some embodiments, the first device 190 may further include a storage module (not shown in FIG. 19), configured to store program instructions and data.

In some embodiments, the processing module 1901 is configured to obtain first information. The transceiver module 1902 is configured to send the first information to a positioning terminal device. The first information includes phase information obtained by a reference device by measuring a reference signal. The first information is used for positioning.

In a possible implementation, the phase information includes one or more of the following:

a first phase measurement value, where the first phase measurement value is a phase measurement value obtained by the reference device by measuring a reference signal of a first positioning assisting node based on a first reference signal resource; a second phase measurement value, where the second phase measurement value is a phase measurement value obtained by the reference device by measuring the reference signal of the first positioning assisting node based on a second reference signal resource; a third phase measurement value, where the third phase measurement value is a phase measurement value obtained by the reference device by measuring a reference signal of a second positioning assisting node based on a third reference signal resource; a fourth phase measurement value, where the fourth phase measurement value is a phase measurement value obtained by the reference device by measuring the reference signal of the second positioning assisting node based on a fourth reference signal resource; a difference between the first phase measurement value and the second phase measurement value; a difference between the first phase measurement value and the third phase measurement value; a difference between the first phase measurement value and the fourth phase measurement value; a difference between the second phase measurement value and the third phase measurement value; a difference between the second phase measurement value and the fourth phase measurement value; or a difference between the third phase measurement value and the fourth phase measurement value.

In a possible implementation, the first information further includes one or more of the following:

identification information of a positioning assisting node for sending the reference signal, identification information of the reference signal, configuration information of the reference signal, measurement time information for measuring the reference signal by the reference device, an RSTD obtained by the reference device by measuring the reference signal, AOD information between the reference device and the positioning assisting node for sending the reference signal, or location information of the reference device.

In a possible implementation, the measurement time information for measuring the reference signal by the reference device includes a moment and/or a time period for receiving the reference signal by the reference device.

In a possible implementation, there are a plurality of reference devices, and the first information includes phase information obtained by each of the plurality of reference devices by measuring the reference signal.

In a possible implementation, the first information further includes an RSTD obtained by each of the plurality of the reference devices by measuring the reference signal, and/or AOD information between each of the plurality of reference devices and the positioning assisting node for sending the reference signal.

In a possible implementation, the first information further includes measurement time information for measuring the reference signal by each of the plurality of reference devices.

In a possible implementation, the first information further includes location information of the plurality of reference devices and/or first indication information, and the first indication information indicates a priority of each of the plurality of reference devices.

In a possible implementation, the RSTD obtained by the reference device by measuring the reference signal may be used to determine a search range for double-difference carrier phase positioning.

In a possible implementation, the first device is a location management network element, and the first information further includes the RSTD obtained by the reference device by measuring the reference signal. That a processing module 1901 obtains first information specifically includes: sending a first measurement request to the reference device through the transceiver module 1902, where the first measurement request is used to request the reference device to send, to the first device, the RSTD and the phase information that are obtained by the reference device by measuring the reference signal; and receiving the phase information and the RSTD that are from the reference device through the transceiver module 1902.

In a possible implementation, the first device is a location management network element, and the first information further includes the AOD information between the reference device and the positioning assisting node for sending the reference signal. That the processing module 1901 obtains first information specifically includes: sending a second measurement request to the reference device through the transceiver module 1902, where the second measurement request is used to request the reference device to send, to the first device, the phase information obtained by the reference device by measuring the reference signal, an RSRP and/or an RSRPP of at least one path; and receiving the phase information from the reference device, and the RSRP and/or the RSRPP of the at least one path through the transceiver module 1902, and determining, based on the RSRP and/or the RSRPP of the at least one path, an AOD between the reference device and the positioning assisting node for sending the reference signal.

In a possible implementation, the first device is a reference device, and before the transceiver module 1902 sends the first information to the positioning terminal device, the processing module 1901 is further configured to obtain second indication information. The second indication information indicates the first device to send the first information to the positioning terminal device.

In this application, the first device 190 is presented with functional modules obtained through division in an integrated manner. The "module" herein may be an application-specific integrated circuit ASIC, a circuit, a processor that executes one or more software or firmware programs and a memory, an integrated logic circuit, and/or another component that can provide the foregoing functions.

In some embodiments, in hardware implementation, a person skilled in the art may figure out that the first device 190 may be in a form of the communication apparatus 120 shown in FIG. 12.

In an example, a function/an implementation process of the processing module 1901 in FIG. 19 may be implemented by the processor 1201 in the communication apparatus 120 shown in FIG. 12 by invoking computer-executable instructions stored in the memory 1202. A function/an implementation process of the transceiver module 1902 in FIG. 19 may be implemented by the transceiver 1203 in the communication apparatus 120 shown in FIG. 12.

In some embodiments, when the first device 190 in FIG. 19 is a chip or a chip system, the function/implementation process of the transceiver module 1902 may be implemented through an input/output interface (or a communication interface) of the chip or the chip system, and the function/implementation process of the processing module 1901 may be implemented by using a processor (or a processing circuit) of the chip or the chip system.

The first device 190 provided in this embodiment may perform the foregoing information sending and receiving method. Therefore, for technical effects that can be achieved by the first device 190, refer to the foregoing method embodiments. Details are not described herein again.

For example, the communication apparatus is the positioning terminal device in the foregoing method embodiments. FIG. 20 is a diagram of a structure of a positioning terminal device 200. The positioning terminal device 200 includes a processing module 2001 and a transceiver module 2002.

In some embodiments, the positioning terminal device 200 may further include a storage module (not shown in FIG. 20), configured to store program instructions and data.

In some embodiments, the transceiver module 2002 may also be referred to as a transceiver unit, configured to implement a sending function and/or a receiving function. The transceiver module 2002 may include a transceiver circuit, a transceiver machine, a transceiver, or a communication interface.

In some embodiments, the transceiver module 2002 may include a receiving module and a sending module that are respectively configured to perform the receiving and sending steps performed by the positioning terminal device in the foregoing method embodiments, and/or configured to support another process of the technology described in this specification. The processing module 2001 may be configured to perform the processing (for example, determining) steps performed by the positioning terminal device in the foregoing method embodiments, and/or configured to support another process of the technology described in this specification. For example, the transceiver module 2002 is configured to receive first information from a first device. The first information includes phase information obtained by a reference device by measuring a reference signal. The first information is used for positioning.

In a possible implementation, in a possible implementation, the phase information includes one or more of the following:

a first phase measurement value, where the first phase measurement value is a phase measurement value obtained by the reference device by measuring a reference signal of a first positioning assisting node based on a first reference signal resource; a second phase measurement value, where the second phase measurement value is a phase measurement value obtained by the reference device by measuring the reference signal of the first positioning assisting node based on a second reference signal resource; a third phase measurement value, where the third phase measurement value is a phase measurement value obtained by the reference device by measuring a reference signal of a second positioning assisting node based on a third reference signal resource; a fourth phase measurement value, where the fourth phase measurement value is a phase measurement value obtained by the reference device by measuring the reference signal of the second positioning assisting node based on a fourth reference signal resource; a difference between the first phase measurement value and the second phase measurement value; a difference between the first phase measurement value and the third phase measurement value; a difference between the first phase measurement value and the fourth phase measurement value; a difference between the second phase measurement value and the third phase measurement value; a difference between the second phase measurement value and the fourth phase measurement value; or a difference between the third phase measurement value and the fourth phase measurement value.

In a possible implementation, the first information further includes one or more of the following:

identification information of a positioning assisting node for sending the reference signal, identification information of the reference signal, configuration information of the reference signal, measurement time information for measuring the reference signal by the reference device, an RSTD obtained by the reference device by measuring the reference signal, AOD information between the reference device and the positioning assisting node for sending the reference signal, or location information of the reference device.

In a possible implementation, the measurement time information for measuring the reference signal by the reference device includes a moment and/or a time period for receiving the reference signal by the reference device.

In a possible implementation, there are a plurality of reference devices, and the first information includes phase information obtained by each of the plurality of reference devices by measuring the reference signal.

In a possible implementation, the first information may further include an RSTD obtained by each of the plurality of the reference devices by measuring the reference signal, and/or AOD information between each of the plurality of reference devices and the positioning assisting node for sending the reference signal.

In a possible implementation, the first information further includes measurement time information for measuring the reference signal by each of the plurality of reference devices.

In a possible implementation, the first information further includes location information of the plurality of reference devices and/or first indication information, and the first indication information indicates a priority of each of the plurality of reference devices.

In a possible implementation, the RSTD obtained by the reference device by measuring the reference signal may be used to determine a search range for double-difference carrier phase positioning.

In a possible implementation, the first information further includes location information of the reference device and AOD information between the reference device and the positioning assisting node for sending the reference signal. The processing module 2001 is configured to obtain measurement result information of a target terminal device, where the measurement result information includes phase information obtained by the target terminal device by measuring the reference signal. The processing module 2001 is further configured to determine location information of the target terminal device based on first information and the measurement result information of the target terminal device.

All related content of the steps in the foregoing method embodiments may be cited in function descriptions of the corresponding functional modules. Details are not described herein again.

In this application, the positioning terminal device 200 is presented with functional modules obtained through division in an integrated manner. The "module" herein may be an application-specific integrated circuit ASIC, a circuit, a processor that executes one or more software or firmware programs and a memory, an integrated logic circuit, and/or another component that can provide the foregoing functions.

In some embodiments, in hardware implementation, a person skilled in the art may figure out that the positioning terminal device 200 may be in a form of the communication apparatus 120 shown in FIG. 12.

In an example, a function/an implementation process of the processing module 2001 in FIG. 20 may be implemented by the processor 1201 in the communication apparatus 120 shown in FIG. 12 by invoking computer-executable instructions stored in the memory 1202. A function/an implementation process of the transceiver module 2002 in FIG. 20 may be implemented by the transceiver 1203 in the communication apparatus 120 shown in FIG. 12.

In some embodiments, when the positioning terminal device 200 in FIG. 20 is a chip or a chip system, a function/implementation process of the transceiver module 2002 may be implemented through an input/output interface (or a communication interface) of the chip or the chip system, and a function/implementation process of the processing module 2001 may be implemented by using a processor (or a processing circuit) of the chip or the chip system.

The positioning terminal device 200 provided in this embodiment may perform the foregoing information sending and receiving method. Therefore, for technical effects that can be achieved by the positioning terminal device 200, refer to the foregoing method embodiments. Details are not described herein again.

In some embodiments, the first device or the positioning terminal device in this application may alternatively be implemented by using the following: one or more field-programmable gate arrays (field-programmable gate arrays, FPGAs), a programmable logic device (programmable logic device, PLD), a controller, a state machine, gate logic, a discrete hardware component, any other suitable circuit, or any combination of circuits that can perform various functions described in this application.

In some embodiments, this application further provides a communication apparatus. The communication apparatus includes a processor, configured to implement the method in any one of the foregoing method embodiments.

In a possible implementation, the communication apparatus further includes a memory. The memory is configured to store a necessary computer program and data. The computer program may include instructions. The processor may invoke the instructions in the computer program stored in the memory, to instruct the communication apparatus to perform the method in any foregoing method embodiment. Certainly, the communication apparatus may alternatively not include a memory.

In another possible implementation, the communication apparatus further includes an interface circuit. The interface circuit is a code/data read/write interface circuit, and the interface circuit is configured to: receive computer-executable instructions (where the computer-executable instructions are stored in a memory, and may be directly read from the memory, or may be read via another component) and send the computer-executable instructions to the processor.

In still another possible implementation, the communication apparatus further includes a communication interface, and the communication interface is configured to communicate with a module other than the communication apparatus.

It may be understood that the communication apparatus may be a chip or a chip system. When the communication apparatus is a chip system, the communication apparatus may include a chip, or may include a chip and another discrete component. This is not specifically limited in embodiments of this application.

This application further provides a computer-readable storage medium. The computer-readable storage medium stores a computer program or instructions. When the computer program or instructions are executed by a computer, functions in any foregoing method embodiment are implemented.

This application further provides a computer program product. When the computer program product is executed by a computer, functions of any one of the foregoing method embodiments are implemented.

A person of ordinary skill in the art may understand that, for the purpose of convenient and brief description, for a detailed working process of the foregoing system, apparatuses, and units, refer to a corresponding process in the foregoing method embodiment. Details are not described herein again.

It may be understood that the system, apparatuses, and methods described in this application may alternatively be implemented in another manner. For example, the described apparatus embodiments are merely examples. For example, division into the units is merely logical function division, and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may be physically separated or not, this is, may be located together in a same place or distributed on a plurality of network units. Parts displayed as units may or may not be physical units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

All or some of the foregoing embodiments may be implemented by using software, hardware, firmware, or any combination thereof. When a software program is used to implement embodiments, all or some embodiments may be implemented in a form of computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state disk, SSD)), or the like. In embodiments of this application, the computer may include the foregoing apparatus.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of "a plurality of". A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to them without departing from the protection scope of this application. Correspondingly, the specification and accompanying drawings are merely example description of this application defined by the appended claims, and are considered as any of or all modifications, variations, combinations or equivalents that cover the scope of this application. It is clear that a person skilled in the art can make various modifications and variations to this application without departing from the scope of this application. This application is further intended to cover these modifications and variations of this application provided that they fall within the scope of protection defined by the following claims and their equivalent technologies.

**Claims**

1. An information sending method, wherein the method comprises:

   obtaining, by a first device, first information, wherein the first information comprises phase information obtained by a reference device by measuring a reference signal, and the first information is used for positioning; and
   sending, by the first device, the first information to a positioning terminal device.

2. The method according to claim 1, wherein the phase information comprises one or more of the following:

   a first phase measurement value, wherein the first phase measurement value is a phase measurement value obtained by the reference device by measuring a reference signal of a first positioning assisting node based on a first reference signal resource;
   a second phase measurement value, wherein the second phase measurement value is a phase measurement value obtained by the reference device by measuring the reference signal of the first positioning assisting node based on a second reference signal resource;
   a third phase measurement value, wherein the third phase measurement value is a phase measurement value obtained by the reference device by measuring a reference signal of a second positioning assisting node based on a third reference signal resource;
   a fourth phase measurement value, wherein the fourth phase measurement value is a phase measurement value obtained by the reference device by measuring the reference signal of the second positioning assisting node based on a fourth reference signal resource;
   a difference between the first phase measurement value and the second phase measurement value;
   a difference between the first phase measurement value and the third phase measurement value;
   a difference between the first phase measurement value and the fourth phase measurement value;
   a difference between the second phase measurement value and the third phase measurement value;
   a difference between the second phase measurement value and the fourth phase measurement value; or
   a difference between the third phase measurement value and the fourth phase measurement value.

3. The method according to claim 1 or 2, wherein the first information further comprises one or more of the following: identification information of a positioning assisting node for sending the reference signal, identification information of the reference signal, configuration information of the reference signal, measurement time information for measuring the reference signal by the reference device, a reference signal time difference of arrival RSTD obtained by the reference device by measuring the reference signal, angle of departure AOD information between the reference device and the positioning assisting node for sending the reference signal, or location information of the reference device.

4. The method according to claim 3, wherein the measurement time information for measuring the reference signal by the reference device comprises a moment and/or a time period for receiving the reference signal by the reference device.

5. The method according to any one of claims 1 to 4, wherein there are a plurality of reference devices, and the first information comprises phase information obtained by each of the plurality of reference devices by measuring the reference signal.

6. The method according to claim 5, wherein the first information further comprises location information of the plurality of reference devices and/or first indication information, and the first indication information indicates a priority of each of the plurality of reference devices.

7. The method according to any one of claims 1 to 6, wherein the first device is a location management network element, and the first information further comprises the RSTD obtained by the reference device by measuring the reference signal; and
   the obtaining, by a first device, first information comprises:

   sending, by the first device, a first measurement request to the reference device, wherein the first measurement request is used to request the reference device to send, to the first device, the phase information and the RSTD that are obtained by the reference device by measuring the reference signal; and
   receiving, by the first device, the phase information and the RSTD that are from the reference device.

8. The method according to any one of claims 1 to 6, wherein the first device is a location management network element, and the first information further comprises the AOD information between the reference device and the positioning assisting node for sending the reference signal; and
   the obtaining, by a first device, first information comprises:

   sending, by the first device, a second measurement request to the reference device, wherein the second measurement request is used to request the reference device to send, to the first device, the phase information obtained by the reference device by measuring the reference signal, a reference signal received power RSRP, and/or a reference signal received path power RSRPP of at least one path; and
   receiving, by the first device, the phase information and the RSRP and/or the RSRPP of the at least one path that are from the reference device, and determining, based on the RSRP and/or the RSRPP of the at least one path, an AOD between the reference device and the positioning assisting node for sending the reference signal.

9. The method according to any one of claims 1 to 6, wherein the first device is the reference device, and before the sending, by the first device, the first information to a positioning terminal device, the method further comprises:
   obtaining, by the first device, second indication information, wherein the second indication information indicates the first device to send the first information to the positioning terminal device.

10. An information receiving method, wherein the method comprises:
    receiving, by a positioning terminal device, first information from a first device, wherein the first information comprises phase information obtained by a reference device by measuring a reference signal, and the first information is used for positioning.

11. The method according to claim 10, wherein the phase information comprises one or more of the following:

    a first phase measurement value, wherein the first phase measurement value is a phase measurement value obtained by the reference device by measuring a reference signal of a first positioning assisting node based on a first reference signal resource;
    a second phase measurement value, wherein the second phase measurement value is a phase measurement value obtained by the reference device by measuring the reference signal of the first positioning assisting node based on a second reference signal resource;
    a third phase measurement value, wherein the third phase measurement value is a phase measurement value obtained by the reference device by measuring a reference signal of a second positioning assisting node based on a third reference signal resource;
    a fourth phase measurement value, wherein the fourth phase measurement value is a phase measurement value obtained by the reference device by measuring the reference signal of the second positioning assisting node based on a fourth reference signal resource;
    a difference between the first phase measurement value and the second phase measurement value;
    a difference between the first phase measurement value and the third phase measurement value;
    a difference between the first phase measurement value and the fourth phase measurement value;
    a difference between the second phase measurement value and the third phase measurement value;
    a difference between the second phase measurement value and the fourth phase measurement value; or
    a difference between the third phase measurement value and the fourth phase measurement value.

12. The method according to claim 10 or 11, wherein the first information further comprises one or more of the following:
    identification information of a positioning assisting node for sending the reference signal, identification information of the reference signal, configuration information of the reference signal, measurement time information for measuring the reference signal by the reference device, a reference signal time difference of arrival RSTD obtained by the reference device by measuring the reference signal, angle of departure AOD information between the reference device and the positioning assisting node for sending the reference signal, or location information of the reference device.

13. The method according to claim 12, wherein the measurement time information for measuring the reference signal by the reference device comprises a moment and/or a time period for receiving the reference signal by the reference device.

14. The method according to any one of claims 10 to 13, wherein there are a plurality of reference devices, and the first information comprises phase information obtained by each of the plurality of reference devices by measuring the reference signal.

15. The method according to claim 14, wherein the first information further comprises location information of the plurality of reference devices and/or first indication information, and the first indication information indicates a priority of each of the plurality of reference devices.

16. A communication apparatus, wherein the communication apparatus is configured to perform the information sending method according to any one of claims 1 to 9.

17. A communication apparatus, wherein the communication apparatus is configured to perform the information receiving method according to any one of claims 10 to 15.

18. A communication apparatus, comprising:

 a processor, wherein the processor is coupled to a memory; and
 the processor is configured to execute a computer program stored in the memory, to enable the communication apparatus to perform the method according to any one of claims 1 to 15.

19. A communication apparatus, comprising:

 a processor and an interface circuit, wherein
 the interface circuit is configured to: receive code instructions and transmit the code instructions to the processor; and
 the processor is configured to run the code instructions to perform the method according to any one of claims 1 to 15.

20. A communication apparatus, wherein the communication apparatus comprises a processor and a transceiver, the transceiver is configured to exchange information between the communication apparatus and another communication apparatus, and the processor executes program instructions to perform the method according to any one of claims 1 to 15.

21. A computer-readable storage medium, wherein the computer-readable storage medium comprises a computer program or instructions; and when the computer program or the instructions are run on a computer, the computer is enabled to perform the method according to any one of claims 1 to 15.

22. A computer program product, wherein the computer program product comprises instructions, and when the instructions are run on a computer, the computer is enabled to perform the method according to any one of claims 1 to 15.

23. A communication system, wherein the communication system comprises a first device and a positioning terminal device, the first device is configured to perform the method according to any one of claims 1 to 9, and the positioning terminal device is configured to perform the method according to any one of claims 10 to 15.

FIG. 1

FIG. 2

FIG. 3

Terminal device | LMF network element

S401: LPP message 2

S402: LPP message 3

FIG. 4

Terminal device | LMF network element

S501: LPP message 4

S502: LPP message 5

FIG. 5

Terminal device | LMF network element

S601: LPP message 6

FIG. 6

Network
device i

PRU    Terminal
device

Network
device j

Network
device k

FIG. 7

First device    Positioning
terminal device

FIG. 8

TP

ng-eNB

TP

LMF    E-SMLC

LTE-Uu    Xn    NG-C    NLs

SLP

Positioning
terminal
device

NR-Uu    gNB    NG-C    AMF

NG-RAN device

FIG. 9

FIG. 10

FIG. 11

Communication apparatus 120

1201

Processor

CPU 0

CPU 1

1204

Processor

CPU 2

CPU 3

1202

Memory

1203

Transceiver

FIG. 12

First device

Positioning terminal device

S1301: Obtain first information

S1303: Obtain second indication information

S1302: Send the first information

S1304: Obtain measurement result information

S1305: Determine location information of a target terminal device

FIG. 13

Network
device #2

Network
device #3

Network
device #1

Target terminal
device

Reference
device

FIG. 14

First network
device

y-axis

Second network
device

$\theta_1$

$\theta_2$

$d_{12}$

$d_{22}$

$d_{11}$

$d_{21}$

Target terminal device

(x,y)

x-axis

Reference device

FIG. 15

FIG. 16

FIG. 17

FIG. 18

First device

Transceiver module ⟷ Processing module

1902

1901

190

FIG. 19

Positioning terminal device

Transceiver module ⟷ Processing module

2002

2001

200

FIG. 20

## INTERNATIONAL SEARCH REPORT

| International application No. |
| --- |
| **PCT/CN2023/123440** |

**A.    CLASSIFICATION OF SUBJECT MATTER**

H04W4/02(2018.01)i

According to International Patent Classification (IPC) or to both national classification and IPC

**B.    FIELDS SEARCHED**

Minimum documentation searched (classification system followed by classification symbols)

IPC: H04W H04L H04Q

Documentation searched other than minimum documentation to the extent that such documents are included in the fields searched

Electronic data base consulted during the international search (name of data base and, where practicable, search terms used)

CNTXT, ENTXT, ENTXTC, WPABS, IEEE, CNKI, 3GPP: 相位, PDOA, 测量, 定位, 位置, 参考信号, 参考, 目标, 设备, 终端, 装置, 单元, UE, 定位管理, 位置管理, LMF, PRU, 辅助, phase, measur+, position+, location, reference signal, RS, reference, target, device?, equipment?, unit?, management, UE-based, assist+, LPP, RSTD, AOD, RSRP, RSRPP

**C.    DOCUMENTS CONSIDERED TO BE RELEVANT**

| Category* | Citation of document, with indication, where appropriate, of the relevant passages | Relevant to claim No. |
| --- | --- | --- |
| PX | CN 115767415 A (HUAWEI TECHNOLOGIES CO., LTD.) 07 March 2023 (2023-03-07) claims 1-21 | 1-23 |
| X | CN 114466448 A (DATANG MOBILE COMMUNICATIONS EQUIPMENT CO., LTD.) 10 May 2022 (2022-05-10) description, paragraphs [0364]-[0369], [0389]-[0393], [0417], [0454], and [0456], and figure 6 and figure 8 | 1-23 |
| X | NOKIA et al. "Initial Views on improved accuracy based on NR carrier phase measurement" *3GPP TSG RAN WG1 #109, R1-2203178*, 20 May 2022 (2022-05-20), section 2 | 1-23 |
| X | CN 112526568 A (DATANG MOBILE COMMUNICATIONS EQUIPMENT CO., LTD.) 19 March 2021 (2021-03-19) description, paragraph [0030] | 1-23 |
| X | CN 113691929 A (DATANG MOBILE COMMUNICATIONS EQUIPMENT CO., LTD.) 23 November 2021 (2021-11-23) description, paragraphs [0122]-[0123] | 1-23 |

☑ Further documents are listed in the continuation of Box C.    ☑ See patent family annex.

| | |
| --- | --- |
| \*    Special categories of cited documents:<br>"A"   document defining the general state of the art which is not considered to be of particular relevance<br>"D"   document cited by the applicant in the international application<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
| --- | --- |
| **06 December 2023** | **12 December 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
|---|
| **PCT/CN2023/123440** |

| C. | DOCUMENTS CONSIDERED TO BE RELEVANT | |
|---|---|---|
| Category* | Citation of document, with indication, where appropriate, of the relevant passages | Relevant to claim No. |
| A | US 11477752 B1 (NOKIA TECHNOLOGIES OY) 18 October 2022 (2022-10-18)<br>entire document | 1-23 |
| A | US 2018310130 A1 (LG ELECTRONICS INC.) 25 October 2018 (2018-10-25)<br>entire document | 1-23 |
| A | US 2022043099 A1 (DATANG MOBILE COMMUNICATIONS EQUIPMENT CO., LTD.)<br>10 February 2022 (2022-02-10)<br>entire document | 1-23 |
| A | WO 2022155244 A2 (IDAC HOLDINGS, INC.) 21 July 2022 (2022-07-21)<br>entire document | 1-23 |
| A | HUAWEI et al. "Discussion on NR carrier phase positioning"<br>*3GPP TSG-RAN WG1 Meeting #109-e, R1-2203166*, 20 May 2022 (2022-05-20),<br>entire document | 1-23 |

**INTERNATIONAL SEARCH REPORT**
Information on patent family members

International application No.

**PCT/CN2023/123440**

| Patent document cited in search report | | | Publication date (day/month/year) | Patent family member(s) | | | Publication date (day/month/year) |
|---|---|---|---|---|---|---|---|
| CN | 115767415 | A | 07 March 2023 | None | | | |
| CN | 114466448 | A | 10 May 2022 | WO | 2022100594 | A1 | 19 May 2022 |
| CN | 112526568 | A | 19 March 2021 | None | | | |
| CN | 113691929 | A | 23 November 2021 | WO | 2021227821 | A1 | 18 November 2021 |
| | | | | EP | 4152774 | A1 | 22 March 2023 |
| | | | | US | 2023180172 | A1 | 08 June 2023 |
| US | 11477752 | B1 | 18 October 2022 | WO | 2022263241 | A1 | 22 December 2022 |
| US | 2018310130 | A1 | 25 October 2018 | None | | | |
| US | 2022043099 | A1 | 10 February 2022 | EP | 3902292 | A1 | 27 October 2021 |
| | | | | WO | 2020125310 | A1 | 25 June 2020 |
| | | | | JP | 2022514430 | A | 10 February 2022 |
| | | | | TW | 202106057 | A | 01 February 2021 |
| | | | | KR | 20210097784 | A | 09 August 2021 |
| WO | 2022155244 | A2 | 21 July 2022 | EP | 4278205 | A2 | 22 November 2023 |

Form PCT/ISA/210 (patent family annex) (July 2022)

**EP 4 607 967 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 202211319222